(19) **Europäisches Patentamt / European Patent Office / Office européen des brevets**

(11) **EP 4 696 802 A1**

(12) **EUROPEAN PATENT APPLICATION**
published in accordance with Art. 153(4) EPC

(43) Date of publication:
**18.02.2026 Bulletin 2026/08**

(21) Application number: **24819122.3**

(22) Date of filing: **16.05.2024**

(51) International Patent Classification (IPC):
*C22C 38/00* (2006.01)   *C21D 9/46* (2006.01)
*C22C 38/14* (2006.01)   *C22C 38/60* (2006.01)

(52) Cooperative Patent Classification (CPC):
**C21D 9/46; C22C 38/00; C22C 38/14; C22C 38/60**

(86) International application number:
**PCT/JP2024/018164**

(87) International publication number:
**WO 2024/252889 (12.12.2024 Gazette 2024/50)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **09.06.2023 JP 2023095362**

(71) Applicant: **JFE Steel Corporation**
**Tokyo, 100-0011 (JP)**

(72) Inventors:
• **MINAMI, Hidekazu**
 **Tokyo 100-0011 (JP)**
• **ENDOH, Kazuki**
 **Tokyo 100-0011 (JP)**
• **TOJI, Yuki**
 **Tokyo 100-0011 (JP)**
• **WADA, Yusuke**
 **Tokyo 100-0011 (JP)**

(74) Representative: **Hoffmann Eitle**
**Patent- und Rechtsanwälte PartmbB**
**Arabellastraße 30**
**81925 München (DE)**

(54) **HIGH-STRENGTH STEEL PLATE, HIGH-STRENGTH PLATED STEEL PLATE, METHODS FOR MANUFACTURING SAME, AND MEMBER**

(57)    It is an object to provide a high strength steel sheet of 1180 MPa or more and a high strength coated steel sheet of 1180 MPa or more that have excellent stretch flangeability, excellent bendability, and high resistance to intra-steel sheet cracking in a spot weld HAZ and can be used for production of a member with high dimensional accuracy and to provide methods for producing the steel sheets, and to provide a member.

A high strength steel sheet has a prescribed chemical composition. An effective Ti mole fraction ($x_{Ti,eff}$) determined by $x_{Ti,eff} = x_{Ti} - x_N - x_S$ ($x_{Ti}$, $x_N$, $x_S$ represent the mole fractions of the respective elements in the steel) satisfies 0.001 or more. The high strength steel sheet has, at a position 1/4 of the thickness, a steel microstructure in which the area fraction of martensite is 60% or more and 99% or less and in which the sum of the area fraction of ferrite and/or the volume fraction of retained austenite is more than 0% and 40% or less. The concentration of boron atoms at prior-austenite grain boundaries with a misorientation of 15 degrees or more is 0.3 at% or more and 6.0 at% or less, and the number density of precipitates with a size of 2 $\mu$m or more is 150 pieces/mm$^2$ or less.

**EP 4 696 802 A1**

## Description

Technical Field

The present disclosure relates to a high strength steel sheet and a high strength coated steel sheet that are suitable for reinforcing parts and framework structural parts of automobiles, to methods for producing these steel sheets, and to a member.

Background Art

To simultaneously reduce $CO_2$ emissions by reducing vehicle weight and improve crashworthiness by reducing vehicle body weight, the strength of steel sheets for automobiles is being increased. Moreover, new legal regulations are being introduced continuously. Therefore, high strength steel sheets are being increasingly used for main structural and reinforcing parts that form frameworks of automobile cabins (these parts are hereinafter referred to also as "automotive framework structural parts") for the purpose of increasing vehicle body strength. In particular, high strength steel sheets with a tensile strength (hereinafter referred to simply as "TS") of 1,180 MPa or higher are being increasingly used.

High strength steel sheets used for reinforcing parts and framework structural parts of automobiles are required to have good formability. Moreover, the formed parts are required to have high dimensional accuracy. For example, parts such as crash boxes have punched edges and bent portions, so that steel sheets with high stretch flangeability and bendability are suitable from the viewpoint of formability. From the viewpoint of performance of parts, absorbable impact energy at the time of collision can be increased by increasing the yield ratio (YR = yield strength YS/tensile strength TS $\times$ 100) of steel sheets. Moreover, from the viewpoint of dimensional accuracy of parts, the yield ratio (YR) of steel sheets is controlled within a certain range. This allows springback of the steel sheets formed into the parts to be reduced, and the dimensional accuracy of the parts can thereby be controlled. To increase the application ratio of high strength steel sheets in automotive parts, it is required that these properties be satisfied in a comprehensive manner.

Among framework structural parts of automobiles, crash boxes, for example, have punched edges and bent portions. Therefore, it is preferable from the viewpoint of formability that steel sheets with high stretch flangeability and bendability are applied for these parts. Moreover, to increase the application ratio of high strength steel sheets in parts including bent portions with relatively small bending radii, there is a demand for high strength steel sheets that have bendability high enough to prevent the occurrence of large cracks in bent portions in which the value of R/t obtained by dividing the bending radius (R) by the sheet thickness (t) is less than 5.0.

Recently, it has been found that, when high strength galvanized steel sheets are spot-welded, zinc in the galvanized layers diffuses into grain boundaries in the surface layers of the steel sheets, causing liquid metal embrittlement (LME). In this case, it has been found that intra-steel sheet cracking (LME cracking) occurs in the spot weld HAZ. The intra-steel sheet cracking in the spot weld HAZ can occur even in a high strength steel sheet having no galvanized layer when the welding partner is a galvanized steel sheet and is recognized as a problem for both types of high-strength steel sheets. During mass production, steel sheets having different thicknesses are spot-welded. Generally, as the sheet thickness increases, the hold time provided for preventing the occurrence of intra-steel sheet cracking in the spot weld HAZ increases. However, a long hold time causes a reduction in productivity. Therefore, there is a demand for high strength steel sheets in which the occurrence of intra-steel sheet cracking in the spot weld HAZ can be prevented even when the hold time is short.

To meet these demands, Patent Literature 1, for example, provides a high strength steel sheet that has a tensile strength of 980 MPa or more, has excellent stretch flangeability, excellent bendability, and high LME resistance, and can be used for production of parts with high dimensional accuracy.

Citation List

Citation List

Patent Literature

PTL 1: Japanese Patent No. 6787535

Summary of Invention

Technical Problem

The high strength steel sheet described in Patent Literature 1 satisfies stretch flangeability, bendability, and LME resistance in a comprehensive manner and can be used for production of parts with high dimensional accuracy. However, the high strength steel sheet described in Patent Literature 1 has a 980 MPa-class TG, and there is room for further improvement in strength.

The present disclosure has been developed in view of the above circumstances, and it is an object to provide a high strength steel sheet of 1180 MPa or more that has excellent stretch flangeability, excellent bendability, and high resistance to intra-steel sheet cracking in the spot weld HAZ and can be used for production of parts with high dimensional accuracy and to provide an advantageous method for producing the high strength steel sheet.

In the present disclosure, the phrase "parts can be produced with high dimensional accuracy (dimensional accuracy during forming is high)" means that the yield ratio (YR) is 65% or more and 90% or less. The YR is determined using the following formula (2).

$$YR = YS / TS \times 100 \qquad (2)$$

Regarding the stretch flangeability, when a hole expansion ratio (hereinafter also referred to as simply as $\lambda$) measured according to JIS Z 2256 is 30% or more, the stretch flangeability is considered excellent.

Regarding the bendability, a bending test is performed using the V-block method with a bending angle of 90 degrees. Specifically, the bending test is performed on five samples, with the bending radius (R) set such that the value of R/t obtained by dividing the bending radius (R) by the sheet thickness (t) is about 4.5, i.e., 4.3 to 4.7. Subsequently, for all the five samples, the length of a crack in a ridge portion at the apex of the bend is evaluated. When the crack length is 200 $\mu$m or less, the bendability is considered excellent.

Regarding the resistance to intra-steel sheet cracking in the spot weld HAZ, a cross-section of a weld described in Examples is observed under an optical microscope (200X), and the resistance to intra-steel sheet cracking in the spot weld HAZ is evaluated according to the following criteria. When the rating is A or B, the resistance to intra-steel sheet cracking in the spot weld HAZ is considered excellent. When the rating is C, the resistance to intra-steel sheet cracking in the spot weld HAZ is considered poor.

A: No crack with a length of 0.1 mm or more is found when the hold time is 0.16 seconds.
B: A crack with a length of 0.1 mm or more is found when the hold time is 0.16 seconds, but no crack with a length of 0.1 mm or more is found when the hold time is 0.20 seconds.
C: A crack with a length of 0.1 mm or more is found when the hold time is 0.20 seconds.

Now, the hold time is the period from the end of the application of the welding current to the start of release of the electrodes.

Solution to Problem

To achieve the foregoing object, the inventors have conducted extensive studies and found the following.

(1) With a steel microstructure composed mainly of martensite (including quenched martensite and tempered martensite) and containing ferrite and/or retained austenite, the YR used as an indicator of the dimensional accuracy of parts can be 65% or more and 90% or less.
(2) By adjusting the concentration of boron atoms at prior-austenite grain boundaries with a misorientation of 15 degrees or more to 0.3 at% or more and 6.0 at% or less, high resistance to intra-steel sheet cracking in the spot weld HAZ can be achieved.
(3) By adjusting the number density of precipitates with a size of 2 $\mu$m or more to 150 pieces/mm$^2$ or less, excellent stretch flangeability and excellent bendability can be achieved.

The present disclosure has been made based on the above findings. Specifically, the summary of the present disclosure is as follows.

[1] A high strength steel sheet having a chemical composition containing, in % by mass, C: 0.030% or more and 0.500% or less, Si: 0.01% or more and 2.50% or less, Mn: 0.10% or more and 5.00% or less, P: 0.100% or less, S: 0.0200% or less, Al: 0.100% or less, N: 0.0100% or less, O: 0.0100% or less, Ti: 0.002% or more and 0.200% or less, and B: 0.0002% or more and 0.0100% or less, with the balance being Fe and incidental impurities, wherein an effective Ti mole fraction ($x_{Ti,eff}$) determined by formula (1) below is 0.001 or more,

wherein the high strength steel sheet has, at a position 1/4 of a thickness, a steel microstructure in which an area fraction of martensite is 60% or more and 99% or less and in which a sum of an area fraction of ferrite and/or a volume fraction of retained austenite is more than 0% and 40% or less, wherein a concentration of boron atoms at prior-austenite grain boundaries with a misorientation of 15 degrees or more is 0.3 at% or more and 6.0 at% or less, and wherein a number density of precipitates with a size of 2 $\mu$m or more is 150 pieces/mm$^2$ or less:

$$x_{Ti,eff} = x_{Ti} - x_N - x_S, \qquad (1)$$

where $x_{Ti}$, $x_N$, and $x_S$ are contents (mole fractions) of respective elements in the steel sheet.

[2] The high strength steel sheet according to [1], wherein the chemical composition further contains, in % by mass, at least one element selected from Nb: 0.200% or less, V: 0.200% or less, Ta: 0.10% or less, W: 0.10% or less, Cr: 1.00% or less, Mo: 1.00% or less, Co: 0.010% or less, Ni: 1.00% or less, Cu: 1.00% or less, Sn: 0.200% or less, Sb: 0.200% or less, Ca: 0.0100% or less, Mg: 0.0100% or less, REMs: 0.0100% or less, Zr: 0.100% or less, Te: 0.100% or less, Hf: 0.10% or less, and Bi: 0.200% or less.

[3] A high strength coated steel sheet including: the high strength steel sheet according to [1] or [2]; and a coated layer on at least one side of the high strength steel sheet.

[4] A method for producing a high strength steel sheet, the method including: preparing a steel slab having the chemical composition according to [1] or [2]; cooling the steel slab at an average cooling rate of 50°C/hr or more and 500°C/hr or less in a temperature range of 700°C or higher and 1000°C or lower; heating the resulting steel slab to a slab heating temperature of 1150°C or higher at an average slab heating rate of 25°C/min or less in a temperature range of 900°C or higher and 1150°C or lower such that a residence time in a range from 1100°C to the slab heating temperature is 20 minutes or longer; subsequently hot-rolling the resulting steel slab with a rough rolling delivery temperature set to 1100°C or higher and a finish rolling entry temperature set to 1050°C or higher to thereby obtain a hot rolled sheet; subsequently, pickling the hot rolled sheet to obtain a pickled sheet; subsequently, subjecting the pickled sheet to cold rolling at a cumulative rolling reduction ratio of 20% or more and 95% or less such that a sheet traveling speed in a final pass of the cold rolling is 50 mpm or more to obtain a cold rolled sheet; subsequently, performing an annealing step of heating the cold rolled sheet to a heating temperature of 780°C or higher; and subsequently subjecting the resulting cold rolled sheet to first cooling under a condition of an average cooling rate of 0.5°C/s or more and 50°C/s or less in a temperature range from the heating temperature to 650°C.

[5] The method for producing a high strength steel sheet according to [4], further including, after the first cooling, performing second cooling such that an average cooling rate in a temperature range of 250°C or higher and 400°C or lower is 1.0°C/s or more.

[6] The method for producing a high strength steel sheet according to [4], further including, after the first cooling, performing second cooling including heat retention at a heat retention temperature of 100°C or higher and 450°C or lower for 5 seconds or longer.

[7] The method for producing a high strength steel sheet according to [4], further including, after the first cooling, performing second cooling including: cooling the cold rolled sheet to a cooling stop temperature of 250°C or lower; and then reheating the resulting cold rolled sheet to a reheating temperature of (the cooling stop temperature + 50°C) or higher and 450°C or lower to perform heat retention at the reheating temperature for 5 seconds or longer.

[8] A method for producing a high strength coated steel sheet, the method including, after the annealing step according to [4], performing a coating step of subjecting at least one side of the cold rolled sheet to coating treatment.

[9] The method for producing a high strength coated steel sheet according to [8], further including, after the first cooling, performing second cooling such that an average cooling rate in a temperature range of 250°C or higher and 400°C or lower is 1.0°C/s or more.

[10] The method for producing a high strength coated steel sheet according to [8], further including, after the first cooling, performing second cooling including heat retention at a heat retention temperature of 100°C or higher and 450°C or lower for 5 seconds or longer.

[11] The method for producing a high strength coated steel sheet according to [8], further including, after the first cooling, performing second cooling including: cooling the cold rolled sheet to a cooling stop temperature of 250°C or lower; and then reheating the resulting cold rolled sheet to a reheating temperature of (the cooling stop temperature + 50°C) or higher and 450°C or lower to perform heat retention at the reheating temperature for 5 seconds or longer.

[12] A member including the high strength steel sheet according to [1] or [2], the high strength steel sheet being used for at least part of the member.

[13] A member including the high strength coated steel sheet according to [3], the high strength coated steel sheet being used for at least part of the member.

Advantageous Effects of Invention

The present disclosure can provide a high strength steel sheet of 1180 MPa or more that has excellent stretch flangeability, excellent bendability, and high resistance to intra-steel sheet cracking in a spot weld HAZ and can be used for production of a member with high dimensional accuracy and can also provide a member.

Description of Embodiments

Embodiments of the present disclosure will next be described. However, the present disclosure is not limited to the following embodiments.

First, appropriate ranges of the chemical composition of a steel sheet and the reasons for the limitations on the ranges of the chemical composition will be described. In the following description, "%" representing the content of a component element of the steel sheet means "% by mass" unless otherwise specified. In the present description, a numerical range represented using "to: ~" means a range including the numerical values before and after the "to" as the lower limit and the upper limit, respectively.

[C: 0.030% or more and 0.500% or less]

C is one of the important basic components of the steel. In particular, in the present disclosure, C is an important element that affects the area fractions of martensite and ferrite and the volume fraction of retained austenite. When the content of C is less than 0.030%, the area fraction of martensite decreases, and the area fraction of ferrite increases, which makes it difficult to achieve a TS of 1180 MPa or more. This also makes it difficult to achieve the desired YR. When the content of C exceeds 0.500%, the volume fraction of retained austenite increases, so that the $\lambda$ and bendability deteriorate. Therefore, the content of C is 0.030% or more and 0.500% or less. The content of C is preferably 0.080% or more. The content of C is preferably 0.400% or less. The content of C is more preferably 0.110% or more. The content of C is more preferably 0.350% or less.

[Si: 0.01% or more and 2.50% or less]

Si is one of the important basic components of the steel. In particular, in the present disclosure, Si reduces the formation of carbides during annealing, facilitates the formation of retained austenite, and is an element that affects the volume fraction of retained austenite. When the content of Si is less than 0.01%, the area fraction of ferrite and/or the volume fraction of retained austenite decreases, and this makes it difficult to achieve the desired YR. When the content of Si exceeds 2.50%, the volume fraction of retained austenite increases, and this makes it difficult to achieve the desired YR. Therefore, the content of Si is 0.01% or more and 2.50% or less. The content of Si is preferably 0.20% or more. The content of Si is preferably 2.00% or less. The content of Si is more preferably 0.25% or more. The content of Si is more preferably 1.50% or less.

[Mn: 0.10% or more and 5.00% or less]

Mn is one of the important basic components of the steel. In particular, in the present disclosure, Mn is an important element that affects the area fractions of martensite and ferrite and the volume fraction of retained austenite. When the content of Mn is less than 0.10%, the area fraction of martensite decreases, and the area fraction of ferrite increase, which makes it difficult to achieve a TS of 1180 MPa or more. This also make it difficult to achieve the desired YR. Meanwhile, when the content of Mn exceeds 5.00%, the area fraction of martensite increases, and the desired area fraction of ferrite and/or the desired volume fraction of retained austenite is not obtained, and this makes it difficult to achieve the desired YR.

Moreover, the $\lambda$ and bendability deteriorate. Therefore, the content of Mn is 0.10% or more and 5.00% or less. The content of Mn is preferably 1.00% or more. The content of Mn is preferably 4.00% or less. The content of Mn is more preferably 2.00% or more. The content of Mn is more preferably 3.50% or less.

[P: 0.100% or less]

When the content of P is excessively large, it segregates at prior-austenite grain boundaries and embrittles the grain boundaries, and the ultimate deformation ability of the steel sheet deteriorates, causing deterioration of the $\lambda$ and bendability. Therefore, the content of P must be 0.100% or less. Now, no particular limitation is imposed on the lower limit of the content of P. However, since P is a solid solution strengthening element and increases the strength of the steel sheet, the content of P is preferably 0.001% or more. Therefore, the content of P is 0.100% or less. The content of P is preferably 0.001% or more. The content of P is preferably 0.070% or less.

[S: 0.0200% or less]

S is present as sulfides and causes an increase in the number density of precipitates with a size of 2 $\mu$m or more, so that the $\lambda$ and bendability deteriorate. Therefore, the content of S must be 0.0200% or less. No particular limitation is imposed on the lower limit of the content of S. However, in view of the limitations on the production technique, the content of S is preferably 0.0001% or more. Therefore, the content of S is 0.0200% or less. The content of S is preferably 0.0001% or more. The content of S is preferably 0.0050% or less.

[Al: 0.100% or less]

When the content of Al is excessively large, the $A_3$ transformation temperature increases, and a large amount of ferrite is contained in the steel microstructure, which makes it difficult to achieve the desired YR. Therefore, the content of Al must be 0.100% or less. No particular limitation is imposed on the lower limit of the content of Al. However, since Al reduces the formation of carbides and facilitates the formation of retained austenite during continuous annealing, the content of Al is preferably 0.001% or more. Therefore, the content of Al is 0.100% or less. The content of Al is preferably 0.001% or more. The content of Al is preferably 0.050% or less.

[N: 0.0100% or less]

N is present as nitrides and causes an increase in the number density of precipitates with a size of 2 $\mu$m or more, so that the $\lambda$ and bendability deteriorate. Therefore, the content of N must be 0.0100% or less. No particular limitation is imposed on the lower limit of the content of N. However, in view of the limitations on the production technique, the content of N is preferably 0.0005% or more. Therefore, the content of N is 0.0100% or less. The content of N is preferably 0.0005% or more. The content of N is preferably 0.0050% or less.

[O: 0.0100% or less]

O is present as oxides and causes an increase in the number density of precipitates with a size of 2 $\mu$m or more, so that the $\lambda$ and bendability deteriorate. Therefore, the content of O must be 0.0100% or less. No particular limitation is imposed on the lower limit of the content of O. However, in view of the limitations on the production technique, the content of O is preferably 0.0001% or more. Therefore, the content of O is 0.0100% or less. The content of O is preferably 0.0001% or more. The content of O is preferably 0.0050% or less.

[Ti: 0.002% or more and 0.200% or less]

Ti forms fine carbides, nitrides, or carbonitrides during hot rolling or annealing and thereby increases the strength of the steel sheet. By adding Ti, the number density of precipitates with a size of 2 $\mu$m or more can be reduced. Moreover, Ti, together with N and S, forms precipitates, and therefore the concentration of boron atoms at prior-austenite grain boundaries with a misorientation of 15 degrees or more can thereby be increased. To obtain these effects, the content of Ti must be 0.002% or more. Meanwhile, when the content of Ti exceeds 0.200%, the amount of the carbides, nitrides, or carbonitrides increases, and this makes it difficult to achieve the desired YR. Therefore, the content of Ti is 0.002% or more and 0.200% or less. The content of Ti is preferably 0.006% or more. The content of Ti is preferably 0.100% or less. The content of Ti is more preferably 0.010% or more. The content of Ti is more preferably 0.050% or less.

[Effective Ti mole fraction ($x_{Ti,eff}$) determined from formula (1) is 0.001 or more]

$$\text{Effective Ti mole fraction } (x_{Ti,eff}) = x_{Ti} - x_N - x_S \qquad (1)$$

In the above formula, $x_{Ti}$, $x_N$, and $x_S$ are contents (mole fractions) of the respective elements in the steel sheet. By adjusting the effective Ti mole fraction determined using formula (1) above to a predetermined value of more, the number density of precipitates with a size of 2 $\mu$m or more can be reduced, and excellent $\lambda$ and bendability can be achieved. Moreover, Ti, together with N and S, forms precipitates, and the concentration of boron atoms at prior-austenite grain boundaries with a misorientation of 15 degrees or more can thereby be increased. To obtain these effects, the effective Ti mole fraction is adjusted to 0.001% or more. No particular limitation is imposed on the upper limit of the effective Ti mole fraction. However, the effective Ti mole fraction is preferably 0.040 or less. Otherwise, the amount of the carbides, nitrides, or carbonitrides increases, and this makes it difficult to achieve the desired YR. Therefore, the effective Ti mole fraction is 0.001% or more. The effective Ti mole fraction is preferably 0.002% or more. The effective Ti mole fraction is preferably 0.040% or less.

[B: 0.0002% or more and 0.0100% or less]

B can increase the concentration of boron atoms at prior-austenite grain boundaries with a misorientation of 15 degrees or more, so that high resistance to intra-steel sheet cracking in the spot weld HAZ can be achieved. To obtain this effect, the content of B must be 0.0002% or more. When the content of B exceeds 0.0100%, the number density of precipitates with a size of 2 $\mu$m or more increases, so that the $\lambda$ and bendability deteriorate. Therefore, the content of B is set to 0.0002% or more and 0.0100% or less. The content of B is preferably 0.0004% or more. The content of B is preferably 0.0080% or less. The content of B is more preferably 0.0005% or more. The content of B is more preferably 0.0050% or less.

A high strength steel sheet according to an embodiment of the present invention has a chemical composition containing the elements described above and further containing Fe and incidental impurities as the balance. Preferably, the high strength steel sheet according to the present embodiment of the present invention has a chemical composition consisting of the elements described above, with the balance being Fe and incidental impurities. The incidental impurities include Zn, Pb, and As. The allowable total content of these impurities is 0.100% or less.

The chemical composition of the high strength steel sheet of the present disclosure may further contain, in addition to the essential components described above, in % by mass, at least one element or a combination of elements selected from Nb: 0.200% or less, V: 0.200% or less, Ta: 0.10% or less, W: 0.10% or less, Cr: 1.00% or less, Mo: 1.00% or less, Ni: 1.00% or less, Co: 0.010% or less, Cu: 1.00% or less, Sn: 0.200% or less, Sb: 0.200% or less, Ca: 0.0100% or less, Mg: 0.0100% or less, REMs: 0.0100% or less, Zr: 0.100% or less, Te: 0.100% or less, Hf: 0.10% or less, and Bi: 0.200% or less.

[Nb: 0.200% or less]

Nb forms a large number of coarse precipitates and inclusions, and this causes deterioration of the ultimate deformation ability of the steel sheet. When the content of Nb is more than 0.200%, the $\lambda$ and bendability deteriorate. Therefore, the content of Nb is 0.200% or less. No particular limitation is imposed on the lower limit of the content of Nb. When the content of Nb is 0.001% or more, fine carbides, nitrides, or carbonitrides are formed during hot rolling or continuous annealing, and the strength of the steel sheet thereby increases, so that the YR can be controlled within the desired range. Therefore, the content of Nb is preferably 0.001% or more. When Nb is added, its content is set to 0.200% or less. The content of Nb is preferably 0.001% or more. The content of Nb is preferably 0.100% or less.

[V: 0.200% or less]

V forms a large number of coarse precipitates and inclusions, and this causes deterioration of the ultimate deformation ability of the steel sheet. When the content of V is more than 0.200%, the $\lambda$ and bendability deteriorate. Therefore, the content of V is set to 0.200% or less. No particular limitation is imposed on the lower limit of the content of V. When the content of V is 0.001% or more, fine carbides, nitrides, or carbonitrides are formed during hot rolling or continuous annealing, and the strength of the steel sheet thereby increases, so that the YR can be controlled within the desired range. Therefore, the content of V is preferably 0.001% or more. When V is added, its content is set to 0.200% or less. The content of V is preferably 0.001% or more. The content of V is preferably 0.100% or less.

[Ta: 0.10% or less and W: 0.10% or less]

When the contents of Ta and W are each more than 0.10%, a large number of coarse precipitates and inclusions are formed, and the ultimate deformation ability of the steel sheet deteriorates, so that the $\lambda$ and bendability deteriorate. Therefore, the contents of Ta and W are each set to 0.10% or less. No particular limitation is imposed on the lower limits of the contents of Ta and W. However, Ta and W form fine carbides, nitrides, or carbonitrides during hot rolling or continuous annealing, and this contributes to an increase in the strength of the steel sheet. Therefore, the contents of Ta and W are each preferably 0.01% or more. When Ta and W are added, their contents are each set to 0.10% or less. The contents of Ta and W are each preferably 0.01% or more. The contents of Ta and W are each preferably 0.08% or less.

[Cr: 1.00% or less, Mo: 1.00% or less, and Ni: 1.00% or less]

When the contents of Cr, Mo, and Ni are each more than 1.00%, the number of coarse precipitates and inclusions increases, and the ultimate deformation ability of the steel sheet deteriorates, so that the $\lambda$ and bendability deteriorate. Therefore, the contents of Cr, Mo, and Ni are each set to 1.00% or less. No particular limitation is imposed on the lower limits of the contents of Cr, Mo, and Ni. However, since these elements improve the hardenability, the contents of Cr, Mo, and Ni are each preferably 0.01% or more. Therefore, when these elements are added, the contents of Cr, Mo, and Ni are each set to 1.00% or less. The contents of Cr, Mo, and Ni are each preferably 0.01% or more. The contents of Cr, Mo, and Ni are each preferably 0.80% or less.

[Co: 0.010% or less]

When the content of Co is more than 0.010%, the amount of coarse precipitates and inclusions increases, and the ultimate deformation ability of the steel sheet deteriorates, so that the $\lambda$ and bendability deteriorate. Therefore, the content of Co is set to 0.010% or less. No particular limitation is imposed on the lower limit of the content of Co. However, since Co is an element that improves the hardenability, the content of Co is preferably 0.001% or more. Specifically, when Co is added, its content is set to 0.010% or less. The content of Co is preferably 0.001% or more. The content of Co is preferably 0.008% or less.

[Cu: 1.00% or less]

When the content of Cu is more than 1.00%, the amount of coarse precipitates and inclusions increases, and the ultimate deformation ability of the steel sheet deteriorates, so that the $\lambda$ and bendability deteriorate. Therefore, the content of Cu is set to 1.00% or less. No particular limitation is imposed on the lower limit of the content of Cu. However, since Cu is an element that improves the hardenability, the content of Cu is preferably 0.01% or more. Therefore, when Cu is added, its content is set to 1.00% or less. The content of Cu is preferably 0.01% or more. The content of Cu is preferably 0.80% or less.

[Sn: 0.200% or less]

When the content of Sn is more than 0.200%, cracks are formed in the steel sheet during casting or hot rolling, and the ultimate deformation ability of the steel sheet deteriorates, so that the $\lambda$ and bendability deteriorate. Therefore, the content of Sn is set to 0.200% or less. No particular limitation is imposed on the lower limit of the content of Sn. However, since Sn is an element that improves the hardenability, the content of Sn is preferably 0.001% or more. Therefore, when Sn is added, its content is set to 0.200% or less. The content of Sn is preferably 0.001% or more. The content of Sn is preferably 0.100% or less.

[Sb: 0.200% or less]

When the content of Sb is more than 0.200%, the number of coarse precipitates and inclusions increases, and the ultimate deformation ability of the steel sheet deteriorates, so that the $\lambda$ and bendability deteriorate. Therefore, the content of Sb is set to 0.200% or less. No particular limitation is imposed on the lower limit of the content of Sb. However, since Sb is an element that can control the thickness of a softened surface layer to adjust the strength, the content of Sb is preferably 0.001% or more. Therefore, when Sb is added, its content is set to 0.200% or less. The content of Sb is preferably 0.001% or more. The content of Sb is preferably 0.100% or less.

[Ca: 0.0100% or less, Mg: 0.0100% or less, and REMs: 0.0100% or less]

When the contents of Ca, Mg, and REMs are each more than 0.0100%, the number of coarse precipitates and inclusions increases, and the ultimate deformation ability of the steel sheet deteriorates, so that the $\lambda$ and bendability deteriorate. Therefore, the contents of Ca, Mg, and REMs are each set to 0.0100% or less. No particular limitation is imposed on the lower limits of the contents of Ca, Mg, and REMs. However, since these elements spheroidize nitrides and sulfides and improve the ultimate deformation ability of the steel sheet, the contents of Ca, Mg, and REMs are each preferably 0.0005% or more. Therefore, when Ca, Mg, and REMs are added, their contents are each set to 0.0100% or less. The contents of Ca, Mg, and REMs are each preferably 0.0005% or more. The contents of Ca, Mg, and REMs are each preferably 0.0050% or less. The REMs (rare earth metals) are a generic term for Sc, Y, and 15 elements from lanthanum (La) with an atomic number of 57 to lutetium (Lu) with an atomic number of 71, and the content of REMs is the total content of these elements.

[Zr: 0.100% or less and Te: 0.100% or less]

When the contents of Zr and Te are each more than 0.100%, the number of coarse precipitates and inclusions increases, and the ultimate deformation ability of the steel sheet deteriorates, so that the λ and bendability deteriorate. Therefore, the contents of Zr and Te must be each 0.100% or less. No particular limitation is imposed on the lower limits of the contents of Zr and Te. However, since Zr and Te are elements that spheroidize nitrides and sulfides and improve the ultimate deformation ability of the steel sheet, their contents are each more preferably 0.001% or more. Therefore, when Zr and Te are added, their contents are each set to 0.100% or less. The contents of Zr and Te are each preferably 0.001% or more. The contents of Zr and Te are each preferably 0.080% or less.

[Hf: 0.10% or less]

When the content of Hf is more than 0.10%, the number of coarse precipitates and inclusions increases, and the ultimate deformation ability of the steel sheet deteriorates, so that the λ and bendability deteriorate. Therefore, the content of Hf is set to 0.10% or less. No particular limitation is imposed on the lower limit of the content of Hf. However, since Hf is an element that spheroidizes nitrides and sulfides and improves the ultimate deformation ability of the steel sheet, the content of Hf is set to preferably 0.01% or more. Therefore, when Hf is added, its content is set to 0.10% or less. The content of Hf is preferably 0.01% or more. The content of Hf is preferably 0.08% or less.

[Bi: 0.200% or less]

When the content of Bi is more than 0.200%, the amount of coarse precipitates and inclusions increases, and the ultimate deformation ability of the steel sheet deteriorates, so that the λ and bendability deteriorate. Therefore, the content of Bi is set to 0.200% or less. No particular limitation is imposed on the lower limit of the content of Bi. However, since Bi is an element that reduces the degree of segregation, its content is preferably 0.001% or more. Therefore, when Bi is added, its content is set to 0.200% or less. The content of Bi is preferably 0.001% or more. The content of Bi is preferably 0.100% or less.

Even when the contents of Nb, V, Ta, W, B, Cr, Mo, Ni, Co, Cu, Sn, Sb, Ca, Mg, REMs, Zr, Te, Hf, and Bi described above are less than their preferred lower limits, the effects of the invention are not impaired. In this case, they are contained as incidental impurities.

Next, the steel microstructure of the steel sheet will be described.

[Area fraction of martensite: 60% or more and 99% or less]

When the area fraction of martensite is less than 60%, the area fraction of ferrite is large, which makes it difficult to achieve a TS of 1180 MPa or more. This also makes it difficult to achieve the desired YR. When the area fraction of martensite exceeds 99%, a sufficient amount of ferrite and/or retained austenite effective in controlling the YR is not present in the steel microstructure, and this makes it difficult to achieve the desired YR. Therefore, the area fraction of martensite is set to 60% or more and 99% or less. The area fraction of martensite is preferably 65% or more. The area fraction of martensite is preferably 98% or less. The area fraction of martensite is more preferably 67% or more. The area fraction of martensite is preferably 97% or less. The term "martensite" as used herein encompasses quenched martensite (fresh martensite), tempered martensite, and bainite. The observation position for the area fraction of martensite is a position 1/4 of the thickness of the steel sheet as described later.

[Sum of area fraction of ferrite and/or volume fraction of retained austenite: more than 0% and 40% or less]

When the sum of the area fraction of ferrite and/or the volume fraction of retained austenite is 0%, the steel microstructure becomes a martensite single-phase microstructure, and this makes it difficult to achieve the desired YR. When the sum of the area fraction of ferrite and/or the volume fraction of retained austenite exceeds 40%, the area fraction of martensite is small, and this makes it difficult to achieve a TS of 1180 MPa or more. This also makes it difficult to achieve the desired YR. Therefore, the sum of the area fraction of ferrite and/or the volume fraction of retained austenite is set to more than 0% and 40% or less. The sum of the area fraction of ferrite and/or the volume fraction of retained austenite is preferably 1% or more. The sum of the area fraction of ferrite and/or the volume fraction of retained austenite is preferably 38% or less. The sum of the area fraction of ferrite and/or the volume fraction of retained austenite is more preferably 2% or more. The total area fraction of the area fraction of ferrite and/or the volume fraction of retained austenite is preferably 35% or less. The term "ferrite" as used herein encompasses bainitic ferrite. The observation position for the area fraction of ferrite and the volume fraction of retained austenite is a position 1/4 of the thickness of the steel sheet as described later.

A method for measuring the area fraction of martensite (quenched martensite, tempered martensite, and bainite) and the area fraction of ferrite (including bainitic ferrite) is as follows.

A sample is cut from the steel sheet such that a thicknesswise cross section (L cross section) parallel to the rolling direction serves as an observation surface, and the observation surface is mirror-polished using a diamond paste. Then the resulting observation surface is etched with 3 vol.% nital to make the microstructure visible. A position 1/4 of the thickness of the steel sheet is used as an observation position, and an SEM (Scanning Electron Microscope) is used to observe three viewing fields each having a viewing area of 17 $\mu$m $\times$ 23 $\mu$m at a magnification of 5000X under the condition of an acceleration voltage of 15 kV. In the obtained microstructure images of the three viewing fields, area fractions of constituent microstructures are calculated by dividing the areas of the constituent microstructures by the measurement area using Adobe Photoshop from Adobe Systems. The obtained values are averaged to obtain the area fractions of the microstructures. In the microstructure images, ferrite (including bainitic ferrite) appears as a concave microstructure and is a flat microstructure containing no carbides, and tempered martensite and bainite appear as concave microstructures and are microstructures containing fine carbides. Quenched martensite appears as convex portions and is a microstructure with fine irregularities thereinside. These microstructures can be distinguished from each other. However, it is unnecessary that tempered martensite, tempered martensite, and bainite be distinguishable from each other because their total area fraction is used to determine the area fraction of martensite.

A method for measuring the volume fraction of retained austenite is as follows.

The steel sheet is ground such that a position 1/4 of the thickness from the surface layer of the steel sheet (a position corresponding to 1/4 of the thickness in the depth direction from the surface of the steel sheet) serves as an observation surface, and the resulting surface is further polished by 0.1 mm by chemical polishing. Then, on the polished surface, the CoK$\alpha$ line from an X-ray diffractometer is used to measure the integrated reflection intensities from (200), (220), and (311) planes of fcc iron (austenite) and (200), (211), and (220) planes of bcc iron. Then the volume fraction of austenite is determined from the intensity ratios of the integrated reflection intensities from the above planes of fcc iron (austenite) to the integrated reflection intensities from the above planes of bcc iron and is used as the volume fraction of retained austenite.

[Concentration of boron atoms at prior-austenite grain boundaries with misorientation of 15 degrees or more: 0.3 at% or more and 6.0 at% or less]

In the present disclosure, this is an extremely important constituent factor of the invention. To control the resistance to intra-steel sheet cracking in the spot weld HAZ, it is important to control the segregation of elements at prior-austenite grain boundaries with a misorientation of 15 degrees or more. In particular, by increasing the concentration of boron atoms at prior-austenite grain boundaries with a misorientation of 15 degrees or more, the resistance to intra-steel sheet cracking in the spot weld HAZ can be improved. To obtain this effect, the concentration of boron atoms at prior-austenite grain boundaries with a misorientation of 15 degrees or more must be adjusted to 0.3 at% or more. When the concentration of boron atoms at prior-austenite grain boundaries with a misorientation of 15 degrees or more exceeds 6.0 at%, the number density of precipitates with a size of 2 $\mu$m or more increases, so that the $\lambda$ and bendability deteriorate. Therefore, the concentration of boron atoms at prior-austenite grain boundaries with a misorientation of 15 degrees or more is set to 0.3 at% or more and 6.0 at% or less. The concentration of boron atoms at prior-austenite grain boundaries with a misorientation of 15 degrees or more is preferably 0.4 at% or more. The concentration of boron atoms at prior-austenite grain boundaries with a misorientation of 15 degrees or more is preferably 5.0 at% or less. The concentration of boron atoms at prior-austenite grain boundaries with a misorientation of 15 degrees or more is more preferably 0.5 at% or more. The concentration of boron atoms at prior-austenite grain boundaries with a misorientation of 15 degrees or more is preferably 4.0 at% or less. The concentration of boron atoms at prior-austenite grain boundaries with a misorientation of 15 degrees or more is more preferably 0.6 at% or more. The concentration of boron atoms at prior-austenite grain boundaries with a misorientation of 15 degrees or more is still more preferably 3.0 at% or less.

A method for measuring the concentration of boron atoms at prior-austenite grain boundaries with a misorientation of 15 degrees or more is as follows.

A sample is cut from the steel sheet such that a thicknesswise cross section (L cross section) parallel to the rolling direction serves as an observation surface, and the observation surface is mirror-polished using a diamond paste. Then the resulting observation surface is etched with 3 vol.% nital to make the microstructure visible. A position 1/4 of the thickness of the steel sheet is used as an observation position, and an SEM is used to observe prior-$\gamma$ grain boundaries in a plurality of viewing fields under the condition of an acceleration voltage of 15 kV at a magnification of 3000X to 5000X. In each viewing field, crystal orientations are measured using an FE-SEM/EBSD (JSM7100F manufactured by JEOL Ltd. and OIM manufactured by TSL). The EBSD measurement is performed under measurement conditions (measurement viewing field: 28 $\mu$m (rolling direction) $\times$ 30 $\mu$m (thickness direction), measurement point spacing: 40 nm) sufficient to evaluate the substructures of martensite using the crystal orientations. Based on the obtained EBSD measurement results, parent phase reconstruction is performed using the Nishiyama-Wasserman relation in the parent grain reconstruction function of OIM Analysis v8.6 software. In other words, the orientations of martensite are converted to the orientations of austenite, and boundaries with a misorientation of 15 degrees or more are drawn on the resulting austenite IPF (Inverse Pole Figure) map to identify prior-austenite grain boundaries with a misorientation of 15 degrees or more. Next, for the identified prior-austenite grain boundaries with a misorientation of 15 degrees or more, a needle-shaped specimen is produced using an FIB (Focused Ion Beam). Then a three-dimensional atom probe (EIKOS-UV manufactured by CAMECA) is used to analyze the concentration of boron atoms. The laser mode of the three-dimensional atom probe is used under the measurement condition of a purse energy of 7 nJ. The obtained results are used to calculate the maximum concentration of boron atoms at the prior-austenite grain boundaries, and the maximum concentration is used as the concentration of boron atoms at prior-austenite grain boundaries with a misorientation of 15 degrees or more.

[Number density of precipitates with size of 2 $\mu$m or more: 150 pieces/mm$^2$ or less]

In the present disclosure, this is an extremely important constituent factor of the invention. To control the $\lambda$ and bendability, it is important to control the number density of precipitates, particularly the number density of precipitates with a size of 2 $\mu$m or more. By reducing the number density of precipitates with a size of 2 $\mu$m or more, the $\lambda$ and bendability can be improved. To obtain this effect, the number density of precipitates with a size of 2 $\mu$m or more must be adjusted to 150 pieces/mm$^2$ or less. No particular limitation is imposed on the lower limit of the number density of precipitates with a size of 2 $\mu$m or more. However, the lower the number density of precipitates with a size of 2 $\mu$m or more, the better. Even when the number density is 0 piece/mm$^2$, the effects of the disclosure can be obtained. Therefore, the number density of precipitates with a size of 2 $\mu$m or more is adjusted to 150 pieces/mm$^2$ or less. The number density of precipitates with a size of 2 $\mu$m or more is preferably 0 pieces/mm$^2$ or more. The number density of precipitates with a size of 2 $\mu$m or more is preferably 100 pieces/mm$^2$ or less. The precipitates with a size of 2 $\mu$m or more are coarse inclusions formed as a result of precipitation of sulfides, nitrides, oxides, borides, etc. in a complex manner.
A method for measuring the number density of precipitates with a size of 2 $\mu$m or more is as follows.
A sample is cut from the steel sheet such that a thicknesswise cross section (L cross section) parallel to the rolling direction serves as an observation surface, and the observation surface is mirror-polished using a diamond paste. In the observation, a reflection electron image of an SEM is used, and the steel sheet is observed along two lines in the rolling direction over the entire thickness under the condition of an acceleration voltage of 15 kV at a magnification of 3000X. The number of precipitates with a size of 2 $\mu$m or more in the viewing field is counted and divided by the measurement area to calculate the number density of precipitates with a size of 2 $\mu$m or more. The "size" of a precipitate means the maximum length of the precipitate.
The steel microstructure in the present disclosure may contain the following microstructures other than the martensite (quenched martensite, tempered martensite, and bainite), ferrite (including bainitic ferrite), and retained austenite described above. Specifically, even when pearlite, carbides such as cementite and metastable carbides, and other known steel sheet microstructures are contained, the effects of the disclosure are not impaired when their area fraction is 5% or less. The metastable carbides include epsilon ($\varepsilon$) carbide, eta ($\eta$) carbide, chi ($\chi$) carbide, etc.

[High strength steel sheet]

The chemical composition and steel microstructure of the high strength steel sheet are as described above. No particular limitation is imposed on the thickness of the high strength steel sheet. The thickness is generally 0.3 mm or more and 2.8 mm or less.

[High strength coated steel sheet]

The high strength coated steel sheet of the disclosure is a high strength coated steel sheet produced by forming a coated layer on at least one side of the high strength steel sheet of the disclosure. No particular limitation is imposed on the type of coated layer, and the coated layer may be, for example, a hot-dip coated layer or an electroplated layer. The coated layer may be an alloyed coated layer. The coated layer is preferably a galvanized layer. The galvanized layer may contain Al and Mg. The coated layer is also preferably a hot-dip zinc-aluminum-magnesium alloy coated layer (Zn-Al-Mg coated layer). In this case, it is preferable that the content of Al is set to 1% by mass or more and 22% by mass or less and the content of Mg is set to 0.1% by mass or more and 10% by mass or less, with the balance being Zn. The Zn-Al-Mg coated layer may contain, in addition to Zn, Al, and Mg, at least one selected from Si, Ni, Ce, and La in a total amount of 1% by mass or less. No particular limitation is imposed on the coating metal. In addition to the Zn coating, an Al coating etc. may be used.
No particular limitation is imposed on the chemical composition of the coated layer, and any commonly used chemical composition may be used. For example, a hot-dip galvanized layer and a hot-dip galvannealed layer generally contain Fe: 20% by mass or less and Al: 0.001% by mass or more and 1.0% by mass or less. Their chemical compositions further contain one or two or more selected from Pb, Sb, Si, Sn, Mg, Mn, Ni, Cr, Co, Ca, Cu, Li, Ti, Be, Bi, and REMs in a total amount of 0% by mass or more and 3.5% by mass or less, with the balance being Zn and incidental impurities. In the present disclosure, it is preferable to include a hot-dip galvanized layer with a coating weight per side of 20 to 80 g/m$^2$ or a hot-dip galvannealed layer obtained by subjecting the hot-dip galvanized layer to galvannealing. When the coated layer is a hot-dip galvanized layer, the content of Fe in the coated layer may be less than 7% by mass. When the coated layer is a hot-dip galvannealed layer, the content of Fe in the coated layer may be 7 to 20% by mass.

Next, a method for producing the high strength steel sheet of the disclosure will be described.

First, a steel slab is produced by melting a steel material having the chemical composition described above. In the present invention, no particular limitation is imposed on the method for melting the steel material, and any known melting method using a converter, an electric arc furnace, etc. may be suitably used. Preferably, the steel slab (slab) is produced using a continuous casting method in order to prevent macro segregation.

Next, after the production of the steel slab, a cooling step is performed to cool the steel slab at an average cooling rate of 50°C/hr or more and 500°C/hr or less in the temperature range of 700°C or higher and 1000°C or lower.

[Average cooling rate in temperature range of 700°C or higher and 1000°C or lower: 50°C/hr or more and 500°C/hr or less]

The average cooling rate in the temperature range of 700°C or higher and 1000°C or lower is an extremely important constituent factor of the invention. By increasing the average cooling rate in the temperature range of 700°C or higher and 1000°C or lower, the number density of precipitates with a size of 2 μm or more can be reduced. To obtain this effect, the average cooling rate in the temperature range of 700°C or higher and 1000°C or lower is set to 50°C/hr or more. Meanwhile, when the average cooling rate in the temperature range of 700°C or higher and 1000°C or lower exceeds 500°C/hr, the concentration of boron atoms at prior-austenite grain boundaries with a misorientation of 15 degrees or more decreases, so that high resistance to intra-steel sheet cracking in the spot weld HAZ cannot be achieved. Therefore, the average cooling rate in the temperature range of 700°C or higher and 1000°C or lower is set to 50°C/hr or more and 500°C/hr or less. The average cooling rate in the temperature range of 700°C or higher and 1000°C or lower is preferably 100°C/hr or more. The average cooling rate in the temperature range of 700°C or higher and 1000°C or lower is preferably 450°C/hr or less. The average cooling rate in the temperature range of 700°C or higher and 1000°C or lower is more preferably 150°C/hr or more. The average cooling rate in the temperature range of 700°C or higher and 1000°C or lower is more preferably 400°C/hr or less. The temperature of the steel slab is the temperature of the surface of the steel slab.

The steel slab may be cooled in the manner described above, then cooled to room temperature, and reheated, as in a conventional method. Alternatively, an energy saving process such as hot direct rolling may be applied. The hot direct rolling is a process in which the steel slab is not cooled to room temperature and the as-heated hot steel slab is introduced into a heating furnace.

Next, the steel slab is heated to a slab heating temperature of 1150°C or higher at an average slab heating rate of 25°C/min or less in the temperature range of 900°C or higher and 1150°C or lower such that the residence time in a range from 1100°C to the slab heating temperature is 20 minutes or longer.

[Average slab heating rate in temperature range of 900°C or higher and 1150°C or lower: 25°C/min or less]

In the present disclosure, this is an extremely important constituent factor of the invention. By setting the average slab heating rate in the temperature range of 900°C or higher and 1150°C or lower to a low value (25°C/min or less), the concentration of boron atoms at prior-austenite grain boundaries with a misorientation of 15 degrees or more can be increased, and the number density of precipitates with a size of 2 μm or more can be reduced. To obtain these effects, the average slab heating rate in the temperature range of 900°C or higher and 1150°C or lower is set to 25°C/min or less. No particular limitation is imposed on the lower limit of the average slab heating rate in the temperature range of 900°C or higher and 1150°C or lower. However, to effectively prevent an increase in the thickness of a softened surface layer after annealing and to adjust the TS within a more preferred range, the average slab heating rate is set to preferably 5°C/min or more. Therefore, the average slab heating rate in the temperature range of 900°C or higher and 1150°C or lower is set to 25°C/min or less. The average slab heating rate in the temperature range of 900°C or higher and 1150°C or lower is preferably 5°C/min or more. The average slab heating rate in the temperature range of 900°C or higher and 1150°C or lower is preferably 15°C/min or less. The slab heating temperature is the temperature of the surface of the steel slab during slab heating.

[Slab heating temperature: 1150°C or higher]

In the present disclosure, this is an extremely important constituent factor of the invention. By setting the slab heating temperature to a high value of 1150°C or higher, the concentration of boron atoms at prior-austenite grain boundaries with a misorientation of 15 degrees or more can be increased, and the number density of precipitates with a

size of 2 μm or more can be reduced. To obtain these effects, the slab heating temperature is set to 1150°C or higher. No particular limitation is imposed on the upper limit of the slab reheating temperature. However, to effectively prevent an increase in the thickness of the softened surface layer after annealing and to adjust the TS within a more preferred range, the slab heating temperature is set to preferably 1300°C or lower. Therefore, the slab heating temperature is 1150°C or higher. The slab heating temperature is preferably 1180°C or higher. The slab heating temperature is preferably 1300°C or lower. The slab heating temperature is the temperature of the surface of the steel slab during slab heating.

[Residence time in a range from 1100°C to the slab heating temperature: 20 minutes or longer]

In the present disclosure, this is an extremely important constituent factor of the invention. By setting the residence time in the range from 1100°C to the slab heating temperature to longer time of 20 minutes or longer, the concentration of boron atoms at prior-austenite grain boundaries with a misorientation of 15 degrees or more can be increased, and the number density of precipitates with a size of 2 μm or more can be reduced. To obtain these effects, the residence time in the range from 1100°C to the slab heating temperature is set to 20 minutes or longer. No particular limitation is imposed on the upper limit of the residence time in the range from 1100°C to the slab heating temperature. However, to effectively prevent an increase in the thickness of the softened surface layer after annealing and to adjust the TS within a more preferred range, the residence time is set to preferably 100 minutes or shorter. Therefore, the residence time in the range from 1100°C to the slab heating temperature is set to 20 minutes or longer. The residence time in the range from 1100°C to the slab heating temperature is preferably 30 minutes or longer. The residence time in the range from 1100°C to the slab heating temperature is preferably 100 minutes or shorter. The slab heating temperature is the temperature of the surface of the steel slab during slab heating.

The slab is subjected to rough rolling under ordinary conditions to form a sheet bar. When the slab heating temperature is set to be low, it is preferable that the sheet bar is heated before finish rolling using, for example, a bar heater, from the viewpoint of preventing troubles during hot rolling.

[Rough rolling delivery temperature: 1100°C or higher]

In the present disclosure, this is an extremely important constituent factor of the invention. By setting the rough rolling delivery temperature to higher temperature of 1100°C or higher, the concentration of boron atoms at prior-austenite grain boundaries with a misorientation of 15 degrees or more can be increased, and the number density of precipitates with a size of 2 μm or more can be reduced. To obtain these effects, the rough rolling delivery temperature is set to 1100°C or higher. No particular limitation is imposed on the upper limit of the rough rolling delivery temperature. However, to effectively prevent an increase in the thickness of a softened surface layer after annealing and to adjust the TS within a more preferred range, the rough rolling delivery temperature is preferably 1200°C or lower. Therefore, the rough rolling delivery temperature is 1100°C or higher. The rough rolling delivery temperature is preferably 1110°C or higher. The rough rolling delivery temperature is preferably 1200°C or lower.

[Finish rolling entry temperature: 1050°C or higher]

In the present disclosure, this is an extremely important constituent factor of the invention. By setting the finish rolling entry temperature to a higher temperature of 1050°C or higher, the concentration of boron atoms at prior-austenite grain boundaries with a misorientation of 15 degrees or more can be increased, and the number density of precipitates with a size of 2 μm or more can be reduced. To obtain these effects, the finish rolling entry temperature is set to 1050°C or higher. No particular limitation is imposed on the upper limit of the finish rolling entry temperature. However, to effectively prevent an increase in the thickness of the softened surface layer after annealing and to adjust the TS within a more preferred range, the finish rolling entry temperature is preferably 1150°C or lower. Therefore, the finish rolling entry temperature is set to 1050°C or higher. The finish rolling entry temperature is preferably 1100°C or higher. The finish rolling entry temperature is preferably 1150°C or lower.

During the finish rolling, the rolling load may increase, and the rolling reduction in a state in which austenite is not recrystallized may increase. In this case, an unexpected microstructure extending in the rolling direction develops, resulting in a reduction in the workability of the annealed sheet. Therefore, it is preferable to perform the finish rolling at a finish rolling delivery temperature higher than or equal to the $Ar_3$ transformation temperature. The temperature of coiling performed after hot rolling is preferably 300°C or higher and more preferably 700°C or lower in order to further improve the workability after annealing. The $Ar_3$ transformation temperature is determined by the following formula.

$Ar_3$ transformation temperature (°C) = 868 - 396 × [%C] + 24.6 × [%Si] - 68.1 × [%Mn] - 36.1 × [%Ni] - 20.7 × [%Cu] - 24.8 × [%Cr]

In the above formula, [% element symbol] represents the content (% by mass) of the element in the chemical composition and is 0 when the element is not contained.

During hot rolling, rough-rolled sheets may be joined together to allow finish rolling to be performed continuously. The rough-rolled sheets may be temporarily coiled. To reduce the rolling load during the hot rolling, part or all of the finish rolling may be performed as lubrication rolling. The lubrication rolling is also effective from the viewpoint of allowing the steel sheet to have a uniform shape and uniform material properties. The coefficient of friction during the lubrication rolling is preferably 0.10 or more and is preferably 0.25 or less.

The thus-produced hot rolled steel sheet is pickled. The pickling allows removal of oxides from the surface of the steel sheet and is essential for imparting good chemical convertibility to the high strength steel sheet used as the final product and for ensuring good coating quality. The pickling may be performed once or repeatedly in a plurality of passes.

Subsequently, the hot rolled sheet subjected to pickling or the hot rolled sheet subjected to pickling and then to optional heat treatment (hot rolled annealed sheet) is cold-rolled to obtain a cold rolled sheet. Preferably, the cold rolling is performed through multi-pass rolling including two or more passes such as tandem-type multi-stand rolling or reverse rolling because uniform strain can be introduced effectively, and a uniform microstructure can be obtained.

In this case, setting the cumulative rolling reduction ratio in the cold rolling to 20% or more and 95% or less and setting the sheet traveling speed in the final pass of the cold rolling to 50 mpm or more are extremely important constituent factors in the present embodiment of the invention.

[Cumulative rolling reduction ratio in a cold rolling: 20% or more and 95% or less]

By increasing the cumulative rolling reduction ratio in the cold rolling, the area fraction of ferrite can be reduced, i.e., the sum of the area fraction of ferrite and/or the volume fraction of retained austenite can be adjusted to 40% or less. To obtain these effects, the cumulative rolling reduction ratio in the cold rolling is set to 20% or more. Meanwhile, when the cumulative rolling reduction ratio in the cold rolling exceeds 95%, the grain size of austenite generated during annealing becomes small, and the amount of retained austenite in the annealed sheet increases. That is, since the sum of the area fraction of ferrite and/or the volume fraction of retained austenite increases, the desired YR cannot be achieved. Therefore, the cumulative rolling reduction ratio in the cold rolling is set to 20% or more and 95% or less. The cumulative rolling reduction ratio in the cold rolling is preferably 25% or more. The cumulative rolling reduction ratio in the cold rolling is preferably 90% or less. The cumulative rolling reduction ratio in the cold rolling is more preferably 27% or more. The cumulative rolling reduction ratio in the cold rolling is more preferably 70% or less.

[Sheet traveling speed in final pass of a cold rolling: 50 mpm or more]

In the present disclosure, this is an extremely important constituent factor of the invention. By increasing the sheet traveling speed in the final pass of the cold rolling, a large amount of strain can be introduced into the steel sheet, and the amount of prior-austenite grain boundaries with a misorientation of 15 degrees or more can be increased. As a result, the concentration of boron atoms at prior-austenite grain boundaries with a misorientation of 15 degrees or more can be increased, and therefore high resistance to intra-steel sheet cracking in the spot weld HAZ can be achieved. To obtain these effects, the sheet traveling speed in the final pass of the cold rolling is set to 50 mpm or more. No particular limitation is imposed on the upper limit of the sheet traveling speed in the final pass of the cold rolling. However, in view of the limitations on the production technique, the sheet traveling speed is preferably 300 mpm or less. Therefore, the sheet traveling speed in the final pass of the cold rolling is set to 50 mpm or more. The sheet traveling speed in the final pass of the cold rolling is preferably 70 mpm or more. The sheet traveling speed in the final pass of the cold rolling is preferably 300 mpm or less.

The cold rolled sheet obtained as described above is subjected to an annealing step. The annealing conditions are as follows.

[Heating temperature: 780°C or higher]

When the heating temperature (annealing temperature) is lower than 780°C, the annealing treatment proceeds in the ferrite-austenite two phase region, and the resulting steel sheet contains a large amount of ferrite after annealing. In this case, the TS of 1180 MPa or more cannot be achieved, and this makes it difficult to achieve the desired YR. In addition, since the concentration of boron atoms at prior-austenite grain boundaries with a misorientation of 15 degrees or more decreases, high resistance to intra-steel sheet cracking in the spot weld HAZ cannot be achieved. Moreover, since the number density of precipitates with a size of 2 $\mu$m or more increases, the $\lambda$ and bendability cannot be improved. Therefore, the heating temperature is set to 780°C or higher. No particular limitation is imposed on the upper limit of the heating temperature. However, when the heating temperature is high, the thickness of the softened surface layer after annealing increases. This may cause a reduction in TS and a coarsening of the grain size of the prior austenite, so that the YR may decrease. Therefore, the heating temperature is preferably 1050°C or lower. The heating temperature is preferably 780°C or higher. The heating temperature is preferably 800°C or higher. The heating temperature is preferably 1050°C or lower. The heating temperature is more preferably 820°C or higher. The heating temperature is more preferably 1000°C or lower. The heating temperature is measured based on the temperature of the surface of the steel sheet.

Preferably, the residence time at 780°C or higher is set to 10 seconds or longer because the concentration of boron atoms at prior-austenite grain boundaries with a misorientation of 15 degrees or more can be increased and the number density of precipitates with a size of 2 μm or more can be reduced. The residence time at 780°C or higher and the heating temperature or lower is more preferably 20 seconds or longer. The residence time at 780°C or higher is more preferably 600 seconds or shorter. The residence time at 780°C or higher is still more preferably 25 seconds or longer. The residence time at 780°C or higher is still more preferably 300 seconds or shorter.

[Cooling step]

After the annealing step, the cold rolled sheet is cooled (this is referred to as the step of cooling the cold rolled sheet). The cooling conditions are as follows.

[Average cooling rate in temperature range from heating temperature to 650°C: 0.5°C/s or more and 50°C/s or less (first cooling)]

In the present disclosure, this is an extremely important constituent factor of the invention. By increasing the average cooling rate in the temperature range from the heating temperature to 650°C, the area fraction of ferrite can be reduced, and the desired TS and the desired YR can be achieved. Moreover, the number density of precipitates with a size of 2 μm or more can be reduced. To obtain these effects, the average cooling rate in the temperature range from the heating temperature to 650°C is set to 0.5°C/s or more. When the average cooling rate in the temperature range from the heating temperature to 650°C exceeds 50°C/s, the concentration of boron atoms at prior-austenite grain boundaries with a misorientation of 15 degrees or more cannot be increased. Therefore, the average cooling rate in the temperature range from the heating temperature to 650°C is set to 0.5°C/s or more and 50°C/s or less. The average cooling rate in the temperature range from the heating temperature to 650°C is preferably 1°C/s or more. The average cooling rate in the temperature range from the heating temperature to 650°C is preferably 40°C/s or less. The average cooling rate in the temperature range from the heating temperature to 650°C is more preferably 3°C/s or more. The average cooling rate in the temperature range from the heating temperature to 650°C is more preferably 35°C/s or less.

[Cooling of cold rolled sheet (second cooling)]

Preferably, after the first cooling, the resulting cold rolled sheet is further cooled (second cooling). In this step, after the first cooling from the heating temperature to 650°C, the cold rolled sheet is further cooled. No particular limitation is imposed on the cooling stop temperature, and the cooling stop temperature may be room temperature. The average cooling rate at 650°C or lower is preferably 5°C/s or more and 30°C/s or less, unless otherwise specified. In the temperature range of 650°C or lower, the high strength steel sheet may be cooled once, and then the temperature of the steel sheet may be again increased.

[Average cooling rate in a temperature range of 250°C or higher and 400°C or lower: 1.0°C/s or more (preferred condition)

When the average cooling rate in the temperature range of 250°C or higher and 400°C or lower in the second cooling step is 1.0°C/s or more, the amount of bainitic ferrite included after annealing can be further reduced, and the YR, λ, and bendability can be further improved. The average cooling rate in the temperature range of 250°C or higher and 400°C or lower is preferably 1.0°C/s or more, more preferably 2.0°C/s or more, and still more preferably 3.0°C/s or more. No particular limitation is imposed on the upper limit of the average cooling rate in the temperature range of 250°C or higher and 400°C or lower. However, in view of the limitations on the production technique, the average cooling rate is preferably 100.0°C/s or lower and still more preferably 80.0°C/s or lower. When the cooling stop temperature exceeds 250°C, the average cooling rate is the value in the temperature range of the cooling stop temperature or higher and 400°C or lower. The average cooling rate is measured based on the surface temperature of the steel sheet.

A cooling method used in the temperature range of 250°C or higher and 400°C or lower may be gas jet cooling, mist cooling, water cooling, air cooling, and the same.

[Heat retention temperature in cooling step: 100°C or higher and 450°C or lower (preferred condition)]

Preferably, in the second cooling step, heat retention is performed in the temperature range of 100°C or higher and 450°C or lower. By subjecting the high strength steel sheet to the heat retention in the above range, the YR, $\lambda$, and bendability can be adjusted within more preferred ranges. Moreover, the area fraction of bainitic ferrite can be further reduced, and the TS can be further improved. The heat retention temperature in the second cooling step is more preferably 150°C or higher and still more preferably 200°C or higher. The heat retention temperature in the second cooling step is more preferably 400°C or lower and still more preferably 350°C or lower. The heat retention temperature is based on the surface temperature of the steel sheet.

[Heat retention time in cooling step: 5 seconds or longer (preferred condition)]

By performing the heat retention at the above-described heat retention temperature, the YR, $\lambda$, and bendability can be adjusted within more preferred ranges. To obtain this effect, the heat retention time at the heat retention temperature is preferably 5 seconds or longer, more preferably 10 seconds or longer, and still more preferably 15 seconds or longer. No particular limitation is imposed on the upper limit of the heat retention time. To adjust the TS within a more preferred range, the heat retention time is preferably 500 seconds or shorter and more preferably 250 seconds or shorter.

[Cooling stop temperature: 250°C or lower (preferred condition)]

In the second cooling step described above, the cooling stop temperature is preferably 250°C or lower and more preferably 200°C or lower. When the cooling stop temperature is 250°C or lower, the formation of a large amount of retained austenite after annealing can be prevented, and the YR, $\lambda$, and bendability can be further improved. No particular limitation is imposed on the lower limit of the cooling stop temperature. However, from the viewpoint of productivity, the cooling stop temperature is preferably higher than or equal to room temperature. The cooling stop temperature is measured based on the surface temperature of the steel sheet.

No particular limitation is imposed on the average cooling rate in the range from 250°C or lower to the cooling stop temperature. However, to further improve the TS, the average cooling rate in the range from 250°C or lower to the cooling stop temperature is preferably 1°C/s or more and more preferably 2°C/s or more. In view of the limitations on the production technique, the average cooling rate in the range from 250°C or lower to the cooling stop temperature is preferably 1000°C/s or lower and more preferably 150°C/s or lower.

The cold rolled sheet may be cooled from the cooling stop temperature to room temperature. No particular limitation is imposed on the average cooling rate from the cooling stop temperature to room temperature, and any method may be used to cool the cold rolled sheet to room temperature. Examples of the cooling method that can be used include gas jet cooling, mist cooling, water cooling, and air cooling.

The high strength steel sheet subjected to the annealing described above and cooled to the cooling stop temperature may be rolled. The elongation ratio in the rolling is preferably 0.05% or more and more preferably 0.10% or more. By setting the elongation ratio in the rolling performed after the cooling to the cooling stop temperature to 0.05% or more, the YR can be controlled within the desired range. The elongation ratio in the rolling is preferably 2.00% or less and more preferably 1.00% or less. By setting the elongation ratio in the rolling after the cooling to the cooling stop temperature to 2.00% or less, the volume fraction of retained austenite can be adjusted within a more preferred range, and the bendability and the degree of damage to sheared end faces in a corrosive environment can be adjusted within more preferred ranges.

The rolling performed after cooling to the cooling stop temperature may be performed in an apparatus connected to the continuous annealing apparatus described above (on-line) or may be performed in an apparatus separated from the continuous annealing apparatus (off-line). The target elongation ratio may be achieved by a single rolling pass, or a plurality of rolling passes may be performed to obtain a total elongation ratio of 0.05% or more and 2.00% or less. The rolling described above is generally a temper rolling. However, any working method such as repeated bending using a tension leveler, or rolls may be used so long as an elongation ratio comparable to that obtained by temper rolling can be obtained.

[Reheating temperature: (cooling stop temperature + 50°C) or higher and 450°C or lower (preferred condition)]

After the cooling to the cooling stop temperature or after the rolling performed after the cooling to the cooling stop temperature, the high strength steel sheet may be reheated (reheating step). By reheating the high strength steel sheet, the YR, $\lambda$, and bendability can be adjusted within more preferred ranges. To obtain this effect, the reheating temperature is preferably (the cooling stop temperature + 50°C) or higher, more preferably (the cooling stop temperature + 100°C) or higher, and still more preferably (the cooling stop temperature + 150°C) or higher. Meanwhile, as the reheating temperature increases, martensite is further tempered, and the TS decreases. Therefore, the reheating temperature is preferably 450°C or lower, more preferably 400°C or lower, and still more preferably 380°C or lower. The reheating temperature is based on the surface temperature of the steel sheet.

[Heat retention time at reheating temperature: 5 seconds or longer (preferred condition)]

By performing heat retention at the reheating temperature, the YR, $\lambda$, and bendability can be adjusted within more preferred ranges. To obtain this effect, the heat retention time at the reheating temperature is preferably 5 seconds or longer, more preferably 10 seconds or longer, and still more preferably 15 seconds or longer. No particular limitation is imposed on the upper limit of the heat retention time at the reheating temperature. However, to adjust the TS within a more preferred range, the heat retention time at the reheating temperature is preferably 500 seconds or shorter and more preferably 250 seconds or shorter.

The steel sheet may be cooled from the reheating temperature to room temperature. No particular limitation is imposed on the cooling rate from the reheating temperature to room temperature, and any method may be used for the cooling to room temperature. Examples of the cooling method that can be used include gas jet cooling, mist cooling, water cooling, and air cooling.

When the high strength steel sheet is used as a trade product, the high strength steel sheet is generally cooled and then used as the trade product.

[Method for producing high strength coated steel sheet]

A high strength coated steel sheet can be obtained by subjecting at least one side of the high strength steel sheet produced as described above to coating treatment. Examples of the coating treatment include hot-dip galvanizing treatment and galvannealing treatment performed after the hot-dip galvanizing treatment. The annealing and galvanization may be performed continuously in a single line. Moreover, the coated layer may be formed by electroplating such as Zn-Ni alloy electroplating, or hot-dip zinc-aluminum-magnesium alloy plating may be performed. The galvanization has mainly been described above. However, no particular limitation is imposed on the type of coating metal, and the coating may be Zn coating, Al coating, etc.

A coated steel sheet can be obtained by subjecting the high strength steel sheet produced as described above to coating treatment. Examples of the coating treatment include hot-dip galvanizing treatment and galvannealing treatment performed after the hot-dip galvanizing treatment. The annealing and galvanization may be performed continuously in a single line. Moreover, the coated layer may be formed by electroplating such as Zn-Ni alloy electroplating, or hot-dip zinc-aluminum-magnesium alloy plating may be performed. The galvanization has mainly been described above. However, no particular limitation is imposed on the type of coating metal, and the coating may be Zn coating, Al coating, etc.

When hot-dip galvanizing treatment is performed, it is preferable that the high strength steel sheet is immersed in a galvanizing bath at 440°C or higher and 500°C or lower to perform the hot-dip galvanizing treatment and then the coating weight is controlled by, for example, gas wiping. Preferably, the hot-dip galvanization is performed using a galvanizing bath with an Al content of 0.10% by mass or more and 0.23% by mass or less. The temperature range when galvannealing treatment is performed after the hot-dip galvanization is preferably 470°C or higher and 600°C or lower and more preferably 470°C or higher and 560°C or lower. By performing the galvannealing at 470°C or higher, a more preferred Zn-Fe alloying rate is achieved, and more preferred productivity is achieved. By performing the galvannealing at 600°C or lower, transformation of untransformed austenite to pearlite is prevented, and a more preferred TS is achieved. Electrogalvanizing treatment may be performed. The coating weight per side is preferably 20 to 80 g/m$^2$ (double-sided coating). Regarding the hot-dip galvannealed steel sheet (GA), it is preferable that galvannealing described later is performed to adjust the concentration of Fe in the coated layer to 7 to 15% by mass.

Regarding the coating treatment, the high strength steel sheet subjected to the annealing step may be subjected to the coating treatment in the temperature range of the heating temperature or lower and 400°C or higher without cooling the high strength steel sheet, or the cold rolled steel sheet may be cooled to lower than 400°C, reheated such that the temperature of the steel sheet is increased to 400°C or higher, and then subjected to the coating treatment.

The high strength steel sheet subjected to the coating treatment may be rolled. The elongation ratio in the rolling is preferably 0.05% or more and more preferably 0.10% or more. By setting the elongation ratio in the rolling performed after the coating treatment to 0.05% or more, the YR can be controlled within the desired range. The elongation ratio in the rolling is preferably 2.00% or less and more preferably 1.00% or less. By setting the elongation ratio in the rolling in the coating treatment to 2.00% or less, the volume fraction of retained austenite can be adjusted within a more preferred range, and the bendability and the degree of damage to sheared end faces in a corrosive environment can be adjusted within more preferred ranges.

The rolling performed after the coating treatment may be performed in an apparatus connected to the continuous annealing apparatus described above (on-line) or may be performed in an apparatus separated from the continuous annealing apparatus (off-line). The target elongation ratio may be achieved by a single rolling pass, or a plurality of rolling passes may be performed to obtain a total elongation ratio of 0.05% or more and 2.00% or less. The rolling described above is generally temper rolling. However, any working method such as repeated bending using a tension leveler, or rolls may be used so long as an elongation ratio comparable to that obtained by temper rolling can be obtained. Reheating treatment may be performed after the rolling performed after the coating treatment.

No particular limitation is imposed on the other production conditions. However, from the viewpoint of productivity, it is preferable that the series of treatments including the annealing, hot-dip galvanization, galvannealing treatment, etc. described above is performed in a hot-dip galvanization line known as a CGL (Continuous Galvanizing Line). After the hot-dip galvanization, wiping may be performed in order to adjust the coating weight. The coating conditions other than the conditions described above may be set according to a conventional procedure for hot-dip galvanization.

When the high strength coated steel sheet is used as a trade product, the high strength coated steel sheet is generally cooled down to room temperature and then used as the trade product.

Production conditions other than the conditions described above may be set according to a conventional procedure.

[Member]

A member according to an embodiment of the invention will be described.

The member according to the present embodiment of the invention is a member prepared using the high strength steel sheet or high strength coated steel sheet according to the preceding embodiment of the invention. The member according to the present embodiment of the invention is prepared, for example, by forming the high strength steel sheet or high strength coated steel sheet according to the preceding embodiment of the invention into an intended shape by, for example, cold pressing. Therefore, the member has the steel microstructure and properties of the high strength steel sheet, or the high strength coated steel sheet even after forming. The member according to the present embodiment of the invention is preferably used for framework structural parts of automobiles and reinforcing parts of automobiles.

The high strength steel sheet according to the preceding embodiment of the invention is a high strength steel sheet of 1180 MPa or more that has excellent bendability and high resistance to intra-steel sheet cracking in the spot weld HAZ and is usable for the production of parts with high dimensional accuracy. Therefore, the member according to the present embodiment of the invention can contribute to a reduction in vehicle body weight and can be particularly preferably used for framework structural parts of automobiles or variety of members for reinforcing parts of automobiles.

EXAMPLES

Steels having chemical compositions shown in Table 1 with the balance being Fe and unavoidable impurities were produced using a converter and then subjected to continuous casting to obtain slabs. Each of the slabs obtained was cooled, then heated, hot-rolled, subjected to pickling treatment, and then cold-rolled. Table 2 shows the cooling rate after casting, the hot-rolling conditions, the pickling conditions, and the cold-rolling conditions. Unannealed cold rolled steel sheets with a thickness of 1.4 mm were thereby produced. In some Examples, cold rolled steel sheets with different thicknesses were also produced.

[Table 1]

| Steel type | Chemical composition (% by mass) | | | | | | | | | | | | | | | | | | | | | | | | | | | | $X_{Ti,eff}$ | Remarks |
|---|---|---|---|---|---|---|---|---|---|---|---|---|---|---|---|---|---|---|---|---|---|---|---|---|---|---|---|---|---|---|
| | C | Si | Mn | P | S | Al | N | O | Ti | B | Nb | V | Ta | W | Cr | Mo | Ni | Co | Cu | Sn | Sb | Ca | Mg | REM | Zr | Te | Hf | Bi | | |
| A | 0.210 | 0.65 | 3.03 | 0.018 | 0.0001 | 0.039 | 0.0025 | 0.0004 | 0.010 | 0.0028 | - | - | - | - | - | - | - | - | - | - | - | - | - | - | - | - | - | - | 0.002 | Suitable steel |
| B | 0.223 | 0.85 | 2.58 | 0.003 | 0.0046 | 0.028 | 0.0031 | 0.0006 | 0.021 | 0.0022 | - | - | - | - | - | - | - | - | - | - | - | - | - | - | - | - | - | - | 0.004 | Suitable steel |
| C | 0.106 | 0.77 | 2.73 | 0.009 | 0.0008 | 0.035 | 0.0030 | 0.0010 | 0.039 | 0.0024 | - | - | - | - | - | - | - | - | - | - | - | - | - | - | - | - | - | - | 0.032 | Suitable steel |
| D | 0.305 | 0.69 | 2.51 | 0.040 | 0.0049 | 0.023 | 0.0032 | 0.0006 | 0.035 | 0.0016 | - | - | - | - | - | - | - | - | - | - | - | - | - | - | - | - | - | - | 0.019 | Suitable steel |
| E | 0.024 | 0.67 | 2.81 | 0.047 | 0.0045 | 0.047 | 0.0050 | 0.0007 | 0.029 | 0.0025 | - | - | - | - | - | - | - | - | - | - | - | - | - | - | - | - | - | - | 0.006 | Comparative steel |
| F | 0.104 | 2.72 | 3.07 | 0.041 | 0.0041 | 0.020 | 0.0038 | 0.0007 | 0.039 | 0.0020 | - | - | - | - | - | - | - | - | - | - | - | - | - | - | - | - | - | - | 0.022 | Comparative steel |
| G | 0.123 | 0.39 | 0.05 | 0.032 | 0.0031 | 0.028 | 0.0044 | 0.0009 | 0.025 | 0.0014 | - | - | - | - | - | - | - | - | - | - | - | - | - | - | - | - | - | - | 0.006 | Comparative steel |
| H | 0.122 | 0.48 | 5.07 | 0.044 | 0.0039 | 0.038 | 0.0033 | 0.0006 | 0.033 | 0.0021 | - | - | - | - | - | - | - | - | - | - | - | - | - | - | - | - | - | - | 0.018 | Comparative steel |
| I | 0.101 | 0.45 | 3.10 | 0.013 | 0.0016 | 0.045 | 0.0035 | 0.0011 | 0.001 | 0.0009 | - | - | - | - | - | - | - | - | - | - | - | - | - | - | - | - | - | - | -0.015 | Comparative steel |
| J | 0.117 | 0.30 | 2.56 | 0.012 | 0.0003 | 0.046 | 0.0037 | 0.0009 | 0.213 | 0.0022 | - | - | - | - | - | - | - | - | - | - | - | - | - | - | - | - | - | - | 0.231 | Comparative steel |
| K | 0.118 | 0.32 | 2.52 | 0.011 | 0.0025 | 0.031 | 0.0050 | 0.0011 | 0.019 | 0.0014 | - | - | - | - | - | - | - | - | - | - | - | - | - | - | - | - | - | - | -0.002 | Comparative steel |
| L | 0.105 | 0.75 | 2.58 | 0.023 | 0.0005 | 0.036 | 0.0038 | 0.0011 | 0.019 | 0.0001 | - | - | - | - | - | - | - | - | - | - | - | - | - | - | - | - | - | - | 0.006 | Comparative steel |
| M | 0.100 | 0.54 | 2.90 | 0.042 | 0.0029 | 0.036 | 0.0026 | 0.0005 | 0.040 | 0.0112 | - | - | - | - | - | - | - | - | - | - | - | - | - | - | - | - | - | - | 0.031 | Comparative steel |
| N | 0.197 | 0.52 | 2.81 | 0.008 | 0.0008 | 0.039 | 0.0028 | 0.0006 | 0.025 | 0.0022 | 0.009 | - | - | - | - | - | - | - | - | - | - | - | - | - | - | - | - | - | 0.016 | Suitable steel |
| O | 0.145 | 0.64 | 2.57 | 0.042 | 0.0029 | 0.033 | 0.0018 | 0.0007 | 0.028 | 0.0007 | - | 0.021 | - | - | - | - | - | - | - | - | - | - | - | - | - | - | - | - | 0.020 | Suitable steel |
| P | 0.257 | 0.34 | 2.89 | 0.011 | 0.0029 | 0.028 | 0.0033 | 0.0012 | 0.045 | 0.0006 | - | - | 0.021 | 0.10 | - | - | - | - | - | - | - | - | - | - | - | - | - | - | 0.034 | Suitable steel |
| Q | 0.215 | 0.55 | 3.04 | 0.029 | 0.0046 | 0.023 | 0.0044 | 0.0009 | 0.023 | 0.0025 | 0.026 | - | 0.024 | - | - | - | - | - | - | - | - | - | - | - | - | - | - | - | 0.001 | Suitable steel |
| R | 0.338 | 0.59 | 3.00 | 0.046 | 0.0022 | 0.037 | 0.0036 | 0.0006 | 0.023 | 0.0015 | - | - | - | - | 0.27 | - | - | - | - | - | - | - | - | - | - | - | - | - | 0.008 | Suitable steel |
| S | 0.256 | 0.81 | 2.79 | 0.049 | 0.0014 | 0.033 | 0.0029 | 0.0009 | 0.048 | 0.0013 | - | - | - | - | - | 0.21 | - | - | - | - | - | - | - | - | - | - | - | - | 0.041 | Suitable steel |
| T | 0.168 | 0.07 | 2.53 | 0.008 | 0.0034 | 0.041 | 0.0046 | 0.0006 | 0.048 | 0.0018 | - | - | - | - | - | - | 0.19 | - | - | - | - | - | - | - | - | - | - | - | 0.031 | Suitable steel |
| U | 0.201 | 1.02 | 3.01 | 0.038 | 0.0025 | 0.038 | 0.0029 | 0.0010 | 0.015 | 0.0024 | - | - | - | - | - | - | - | 0.006 | - | - | - | - | - | - | - | - | - | - | 0.002 | Suitable steel |
| V | 0.174 | 1.62 | 2.58 | 0.043 | 0.0008 | 0.037 | 0.0046 | 0.0006 | 0.020 | 0.0011 | - | - | - | - | - | - | - | - | 0.15 | - | - | - | - | - | - | - | - | - | 0.004 | Suitable steel |
| W | 0.210 | 0.75 | 1.86 | 0.031 | 0.0007 | 0.035 | 0.0032 | 0.0013 | 0.023 | 0.0018 | - | - | - | - | - | - | - | - | - | 0.032 | - | - | - | - | - | - | - | - | 0.013 | Suitable steel |
| X | 0.177 | 0.45 | 3.21 | 0.003 | 0.0040 | 0.044 | 0.0033 | 0.0007 | 0.040 | 0.0013 | - | - | - | - | - | - | - | - | - | - | 0.008 | 0.0010 | - | - | - | - | - | - | 0.026 | Suitable steel |
| Y | 0.178 | 0.55 | 2.71 | 0.013 | 0.0021 | 0.050 | 0.0045 | 0.0013 | 0.036 | 0.0024 | - | - | - | - | - | - | - | - | - | - | - | - | 0.0003 | 0.0009 | 0.044 | - | - | - | 0.020 | Suitable steel |
| Z | 0.297 | 0.67 | 2.59 | 0.029 | 0.0009 | 0.035 | 0.0028 | 0.0010 | 0.037 | 0.0022 | - | - | - | - | - | - | - | - | - | - | - | - | - | - | - | 0.008 | 0.03 | 0.010 | 0.030 | Suitable steel |

Underline: Outside the corresponding range.

[Table 2]

| No. | Steel type | Slab cooling step | Hot rolling step | | | | | | Cold rolling step | | | Remarks |
|---|---|---|---|---|---|---|---|---|---|---|---|---|
| | | Average cooling rate from 700 to 1000°C (°C/hr) | Average slab heating rate from 900 to 1150°C (°C/min) | Slab heating temperature (°C) | Residence time from 1100°C to slab heating temperature (min) | Rough rolling delivery temperature (°C) | Finish rolling entry temperature (°C) | Thickness (mm) | Cumulative rolling reduction ratio (%) | Sheet traveling speed in final pass (mpm) | Thickness (mm) | |
| 1 | A | 100 | 5 | 1200 | 40 | 1120 | 1100 | 2.8 | 50 | 200 | 1.4 | Inventive Example |
| 2 | A | 100 | 5 | 1200 | 40 | 1120 | 1100 | 2.8 | 50 | 200 | 1.4 | Inventive Example |
| 3 | A | 100 | 5 | 1200 | 40 | 1120 | 1100 | 2.8 | 50 | 200 | 1.4 | Inventive Example |
| 4 | A | 500 | 5 | 1200 | 40 | 1120 | 1100 | 5.6 | 50 | 200 | 2.8 | Inventive Example |
| 5 | A | 100 | 25 | 1200 | 40 | 1120 | 1100 | 5.6 | 50 | 200 | 2.8 | Inventive Example |
| 6 | A | 100 | 5 | 1200 | 20 | 1120 | 1100 | 5.6 | 50 | 200 | 2.8 | Inventive Example |
| 7 | A | 100 | 5 | 1200 | 40 | 1100 | 1100 | 5.6 | 50 | 200 | 2.8 | Inventive Example |
| 8 | A | 100 | 5 | 1200 | 40 | 1120 | 1050 | 5.6 | 50 | 200 | 2.8 | Inventive Example |
| 9 | A | 100 | 5 | 1200 | 40 | 1120 | 1100 | 5.6 | 50 | 200 | 2.8 | Inventive Example |
| 10 | A | 100 | 5 | 1200 | 40 | 1120 | 1100 | 5.6 | 50 | 200 | 2.8 | Inventive Example |
| 11 | A | 100 | 5 | 1200 | 40 | 1120 | 1100 | 2.8 | 50 | 200 | 1.4 | Inventive Example |

(continued)

| No. | Steel type | Slab cooling step | Hot rolling step | | | | | | Cold rolling step | | | Remarks |
|---|---|---|---|---|---|---|---|---|---|---|---|---|
| | | Average cooling rate from 700 to 1000°C (°C/hr) | Average slab heating rate from 900 to 1150°C (°C/min) | Slab heating temperature (°C) | Residence time from 1100°C to slab heating temperature (min) | Rough rolling delivery temperature (°C) | Finish rolling entry temperature (°C) | Thickness (mm) | Cumulative rolling reduction ratio (%) | Sheet traveling speed in final pass (mpm) | Thickness (mm) | |
| 12 | B | 300 | 8 | 1300 | 50 | 1180 | 1090 | 2.3 | 40 | 100 | 1.4 | Inventive Example |
| 13 | C | 450 | 7 | 1250 | 50 | 1160 | 1060 | 2.5 | 45 | 150 | 1.4 | Inventive Example |
| 14 | C | 450 | 7 | 1250 | 50 | 1160 | 1060 | 2.5 | 45 | 150 | 1.4 | Inventive Example |
| 15 | C | 450 | 7 | 1250 | 50 | 1160 | 1060 | 2.5 | 45 | 150 | 1.4 | Inventive Example |
| 16 | C | _25_ | 7 | 1250 | 50 | 1160 | 1060 | 2.5 | 45 | 150 | 1.4 | Comparative Example |
| 17 | C | _25_ | 7 | 1250 | 50 | 1160 | 1060 | 5.1 | 45 | 150 | 2.8 | Comparative Example |
| 18 | C | _650_ | 7 | 1250 | 50 | 1160 | 1060 | 2.5 | 45 | 150 | 1.4 | Comparative Example |
| 19 | C | 450 | _35_ | 1250 | 50 | 1160 | 1060 | 2.5 | 45 | 150 | 1.4 | Comparative Example |
| 20 | C | 450 | 7 | _1050_ | 50 | 1160 | 1060 | 2.5 | 45 | 150 | 1.4 | Comparative Example |
| 21 | C | 450 | 7 | 1250 | 5 | 1160 | 1060 | 2.5 | 45 | 150 | 1.4 | Comparative Example |
| 22 | C | 450 | 7 | 1250 | 50 | _1080_ | 1060 | 2.5 | 45 | 150 | 1.4 | Comparative Example |

(continued)

| No. | Steel type | Slab cooling step Average cooling rate from 700 to 1000°C (°C/hr) | Hot rolling step | | | | | | Cold rolling step | | | Remarks |
|---|---|---|---|---|---|---|---|---|---|---|---|---|
| | | | Average slab heating rate from 900 to 1150°C (°C/min) | Slab heating temperature (°C) | Residence time from 1100°C to slab heating temperature (min) | Rough rolling delivery temperature (°C) | Finish rolling entry temperature (°C) | Thickness (mm) | Cumulative rolling reduction ratio (%) | Sheet traveling speed in final pass (mpm) | Thickness (mm) | |
| 23 | C | 450 | 7 | 1250 | 50 | 1160 | 1000 | 2.5 | 45 | 150 | 1.4 | Comparative Example |
| 24 | C | 450 | 7 | 1250 | 50 | 1160 | 1060 | 1.6 | 10 | 150 | 1.4 | Comparative Example |
| 25 | C | 450 | 7 | 1250 | 50 | 1160 | 1060 | 70.0 | 98 | 150 | 1.4 | Comparative Example |
| 26 | C | 450 | 7 | 1250 | 50 | 1160 | 1060 | 2.5 | 45 | 25 | 1.4 | Comparative Example |
| 27 | C | 450 | 7 | 1250 | 50 | 1160 | 1060 | 2.5 | 45 | 150 | 1.4 | Comparative Example |
| 28 | C | 450 | 7 | 1250 | 50 | 1160 | 1060 | 2.5 | 45 | 150 | 1.4 | Comparative Example |
| 29 | C | 450 | 7 | 1250 | 50 | 1160 | 1060 | 5.1 | 45 | 150 | 2.8 | Comparative Example |
| 30 | C | 450 | 7 | 1250 | 50 | 1160 | 1060 | 2.5 | 45 | 150 | 1.4 | Comparative Example |
| 31 | C | 450 | 7 | 1200 | 50 | 1160 | 1060 | 2.5 | 45 | 150 | 1.4 | Inventive Example |
| 32 | C | 450 | 7 | 1200 | 50 | 1160 | 1060 | 2.5 | 45 | 150 | 1.4 | Inventive Example |
| 33 | C | 450 | 7 | 1200 | 50 | 1160 | 1060 | 2.5 | 45 | 150 | 1.4 | Inventive Example |

(continued)

| No. | Steel type | Slab cooling step Average cooling rate from 700 to 1000°C (°C/hr) | Hot rolling step Average slab heating rate from 900 to 1150°C (°C/min) | Slab heating temperature (°C) | Residence time from 1100°C to slab heating temperature (min) | Rough rolling delivery temperature (°C) | Finish rolling entry temperature (°C) | Thickness (mm) | Cold rolling step Cumulative rolling reduction ratio (%) | Sheet traveling speed in final pass (mpm) | Thickness (mm) | Remarks |
|---|---|---|---|---|---|---|---|---|---|---|---|---|
| 34 | D | 100 | 15 | 1200 | 150 | 1130 | 1100 | 3.1 | 55 | 300 | 1.4 | Inventive Example |
| 35 | E | 200 | 10 | 1250 | 40 | 1150 | 1130 | 3.1 | 55 | 250 | 1.4 | Comparative Example |
| 36 | F | 200 | 10 | 1250 | 40 | 1150 | 1130 | 3.1 | 55 | 250 | 1.4 | Comparative Example |
| 37 | G | 200 | 10 | 1250 | 40 | 1150 | 1130 | 3.1 | 55 | 250 | 1.4 | Comparative Example |
| 38 | H | 200 | 10 | 1250 | 40 | 1150 | 1130 | 3.1 | 55 | 250 | 1.4 | Comparative Example |
| 39 | I | 200 | 10 | 1250 | 40 | 1150 | 1130 | 3.1 | 55 | 250 | 1.4 | Comparative Example |
| 40 | J | 200 | 10 | 1250 | 40 | 1150 | 1130 | 3.1 | 55 | 250 | 1.4 | Comparative Example |
| 41 | K | 200 | 10 | 1250 | 40 | 1150 | 1130 | 3.1 | 55 | 250 | 1.4 | Comparative Example |
| 42 | L | 200 | 10 | 1250 | 40 | 1150 | 1130 | 3.1 | 55 | 250 | 1.4 | Comparative Example |
| 43 | M | 200 | 10 | 1250 | 40 | 1150 | 1130 | 3.1 | 55 | 250 | 1.4 | Comparative Example |
| 44 | N | 150 | 20 | 1150 | 100 | 1110 | 1090 | 2.8 | 50 | 350 | 1.4 | Inventive Example |

(continued)

| No. | Steel type | Slab cooling step | Hot rolling step | | | | | | Cold rolling step | | | Remarks |
|---|---|---|---|---|---|---|---|---|---|---|---|---|
| | | Average cooling rate from 700 to 1000°C (°C/hr) | Average slab heating rate from 900 to 1150°C (°C/min) | Slab heating temperature (°C) | Residence time from 1100°C to slab heating temperature (min) | Rough rolling delivery temperature (°C) | Finish rolling entry temperature (°C) | Thickness (mm) | Cumulative rolling reduction ratio (%) | Sheet traveling speed in final pass (mpm) | Thickness (mm) | |
| 45 | O | 400 | 2 | 1200 | 20 | 1130 | 1060 | 2.8 | 50 | 100 | 1.4 | Inventive Example |
| 46 | P | 300 | 15 | 1200 | 40 | 1200 | 1080 | 2.8 | 50 | 200 | 1.4 | Inventive Example |
| 47 | Q | 50 | 15 | 1200 | 40 | 1170 | 1090 | 2.8 | 50 | 300 | 1.4 | Inventive Example |
| 48 | R | 250 | 10 | 1200 | 100 | 1110 | 1070 | 1.9 | 25 | 300 | 1.4 | Inventive Example |
| 49 | S | 300 | 10 | 1200 | 20 | 1170 | 1070 | 4.7 | 70 | 100 | 1.4 | Inventive Example |
| 50 | T | 150 | 8 | 1200 | 40 | 1190 | 1080 | 1.8 | 20 | 200 | 1.4 | Inventive Example |
| 51 | U | 400 | 8 | 1200 | 100 | 1130 | 1140 | 3.1 | 55 | 100 | 1.4 | Inventive Example |
| 52 | V | 150 | 8 | 1200 | 50 | 1170 | 1090 | 3.1 | 55 | 100 | 1.4 | Inventive Example |
| 53 | W | 400 | 3 | 1200 | 50 | 1110 | 1060 | 2.8 | 50 | 300 | 1.4 | Inventive Example |
| 54 | X | 300 | 5 | 1250 | 40 | 1130 | 1080 | 3.1 | 55 | 300 | 1.4 | Inventive Example |
| 55 | Y | 150 | 5 | 1250 | 50 | 1110 | 1090 | 3.1 | 55 | 50 | 1.4 | Inventive Example |

(continued)

| No. | Steel type | Slab cooling step | Hot rolling step | | | | | | | Cold rolling step | | | Remarks |
|---|---|---|---|---|---|---|---|---|---|---|---|---|---|
| | | Average cooling rate from 700 to 1000°C (°C/hr) | Average slab heating rate from 900 to 1150°C (°C/min) | Slab heating temperature (°C) | Residence time from 1100°C to slab heating temperature (min) | Rough rolling delivery temperature (°C) | Finish rolling entry temperature (°C) | Thickness (mm) | | Cumulative rolling reduction ratio (%) | Sheet traveling speed in final pass (mpm) | Thickness (mm) | |
| 56 | Z | 150 | 3 | 1250 | 50 | 1110 | 1090 | 3.1 | | 55 | 400 | 1.4 | Inventive Example |

Underline: Outside the corresponding range.

[Table 3]

| No. | Steel type | Annealing step | | Second cooling step | | | | Reheating step (included in second cooling step) | | Coating treatment condition | Remarks |
|---|---|---|---|---|---|---|---|---|---|---|---|
| | | Heating temperature (°C) | Average first cooling rate from 650°C to heating temperature (°C/s) | Average cooling rate from 250 to 400°C (°C/s) | Heat retention temperature (°C) | Heat retention time (s) | Cooling stop temperature (°C) | Reheating temperature (°C) | Heat retention time at reheating temperature (s) | Type | |
| 1 | A | 950 | 30 | 14.7 | - | - | 50 | 350 | 50 | CR | Inventive Example |
| 2 | A | 950 | 30 | 14.7 | 300 | 70 | - | - | - | CR | Inventive Example |
| 3 | A | 950 | 30 | 14.7 | 150 | 120 | - | - | - | CR | Inventive Example |
| 4 | A | 950 | 30 | 14.7 | 150 | 120 | - | - | - | CR | Inventive Example |
| 5 | A | 950 | 30 | 14.7 | 150 | 120 | - | - | - | CR | Inventive Example |
| 6 | A | 950 | 30 | 14.7 | 150 | 120 | - | - | - | CR | Inventive Example |
| 7 | A | 950 | 30 | 14.7 | 150 | 120 | - | - | - | CR | Inventive Example |
| 8 | A | 950 | 30 | 14.7 | 150 | 120 | - | - | - | CR | Inventive Example |
| 9 | A | 950 | 50 | 14.7 | 150 | 120 | - | - | - | CR | Inventive Example |
| 10 | A | 950 | 0.5 | 14.7 | 150 | 120 | - | - | - | CR | Inventive Example |
| 11 | A | 950 | 30.0 | 14.7 | - | - | - | - | - | CR | Inventive Example |
| 12 | B | 850 | 3 | 9.8 | - | - | 80 | 250 | 100 | GA | Inventive Example |

| No. | Steel type | Annealing step | | Second cooling step | | | | | Reheating step (included in second cooling step) | | Coating treatment condition | Remarks |
|---|---|---|---|---|---|---|---|---|---|---|---|---|
| | | Heating temperature (°C) | Average first cooling rate from 650°C to heating temperature (°C/s) | Average cooling rate from 250 to 400°C (°C/s) | Heat retention temperature (°C) | Heat retention time (s) | Cooling stop temperature (°C) | | Reheating temperature (°C) | Heat retention time at reheating temperature (s) | Type | |
| 13 | C | 890 | 10 | 5.0 | - | - | Room temperature | | 300 | 60 | GA | Inventive Example |
| 14 | C | 890 | 10 | 5.0 | 350 | 60 | - | | - | - | GA | Inventive Example |
| 15 | C | 890 | 10 | 5.0 | 200 | 100 | - | | - | - | GA | Inventive Example |
| 16 | C | 890 | 10 | 5.0 | - | - | Room temperature | | 300 | 60 | GA | Comparative Example |
| 17 | C | 890 | 10 | 5.0 | - | - | Room temperature | | 300 | 60 | GA | Comparative Example |
| 18 | C | 890 | 10 | 5.0 | - | - | Room temperature | | 300 | 60 | GA | Comparative Example |
| 19 | C | 890 | 10 | 5.0 | - | - | Room temperature | | 300 | 60 | GA | Comparative Example |
| 20 | C | 890 | 10 | 5.0 | - | - | Room temperature | | 300 | 60 | GA | Comparative Example |
| 21 | C | 890 | 10 | 5.0 | - | - | Room temperature | | 300 | 60 | GA | Comparative Example |
| 22 | C | 890 | 10 | 5.0 | - | - | Room temperature | | 300 | 60 | GA | Comparative Example |
| 23 | C | 890 | 10 | 5.0 | - | - | Room temperature | | 300 | 60 | GA | Comparative Example |
| 24 | C | 890 | 10 | 5.0 | - | - | Room temperature | | 300 | 60 | GA | Comparative Example |

(continued)

| No. | Steel type | Annealing step | | Second cooling step | | | | | Reheating step (included in second cooling step) | | Coating treatment condition | Remarks |
| | | Heating temperature (°C) | Average first cooling rate from 650°C to heating temperature (°C/s) | Average cooling rate from 250 to 400°C (°C/s) | Heat retention temperature (°C) | Heat retention time (s) | Cooling stop temperature (°C) | | Reheating temperature (°C) | Heat retention time at reheating temperature (s) | Type | |
| 25 | C | 890 | 10 | 5.0 | - | - | Room temperature | | 300 | 60 | GA | Comparative Example |
| 26 | C | 890 | 10 | 5.0 | - | - | Room temperature | | 300 | 60 | GA | Comparative Example |
| 27 | C | 750 | 10 | 5.0 | - | - | Room temperature | | 300 | 60 | GA | Comparative Example |
| 28 | C | 890 | 0.2 | 5.0 | - | - | Room temperature | | 300 | 60 | GA | Comparative Example |
| 29 | C | 890 | 0.2 | 5.0 | - | - | Room temperature | | 300 | 60 | GA | Comparative Example |
| 30 | C | 890 | 60 | 5.0 | - | - | Room temperature | | 300 | 60 | GA | Comparative Example |
| 31 | C | 890 | 10 | 0.5 | - | - | Room temperature | | 300 | 60 | GA | Inventive Example |
| 32 | C | 890 | 10 | 5.0 | - | - | 300 | | 300 | 60 | GA | Inventive Example |
| 33 | C | 890 | 10 | 5.0 | - | - | Room temperature | | 500 | 60 | GA | Inventive Example |
| 34 | D | 850 | 20 | 9.8 | - | - | Room temperature | | 300 | 60 | GA | Inventive Example |
| 35 | E | 820 | 15 | 3.0 | - | - | 50 | | 200 | 90 | GA | Comparative Example |
| 36 | F | 820 | 15 | 3.0 | - | - | 50 | | 200 | 90 | GA | Comparative Example |

(continued)

| No. | Steel type | Annealing step | | Second cooling step | | | | Reheating step (included in second cooling step) | | Coating treatment condition | Remarks |
|---|---|---|---|---|---|---|---|---|---|---|---|
| | | Heating temperature (°C) | Average first cooling rate from 650°C to heating temperature (°C/s) | Average cooling rate from 250 to 400°C (°C/s) | Heat retention temperature (°C) | Heat retention time (s) | Cooling stop temperature (°C) | Reheating temperature (°C) | Heat retention time at reheating temperature (s) | Type | |
| 37 | G | 820 | 15 | 3.0 | - | - | 50 | 200 | 90 | GA | Comparative Example |
| 38 | H | 820 | 15 | 3.0 | - | - | 50 | 200 | 90 | GA | Comparative Example |
| 39 | I | 820 | 15 | 3.0 | - | - | 50 | 200 | 90 | GA | Comparative Example |
| 40 | J | 820 | 15 | 3.0 | - | - | 50 | 200 | 90 | GA | Comparative Example |
| 41 | K | 820 | 15 | 3.0 | - | - | 50 | 200 | 90 | GA | Comparative Example |
| 42 | L | 820 | 15 | 3.0 | - | - | 50 | 200 | 90 | GA | Comparative Example |
| 43 | M | 820 | 15 | 3.0 | - | - | 50 | 200 | 90 | GA | Comparative Example |
| 44 | N | 825 | 40 | 15.1 | - | - | Room temperature | 300 | 100 | GA | Inventive Example |
| 45 | O | 830 | 5 | 10.3 | - | - | 80 | 250 | 100 | GA | Inventive Example |
| 46 | P | 840 | 25 | 29.8 | - | - | Room temperature | 250 | 100 | GA | Inventive Example |
| 47 | Q | 850 | 20 | 14.5 | - | - | 80 | 300 | 50 | GA | Inventive Example |
| 48 | R | 830 | 5 | 15.2 | - | - | 100 | 300 | 100 | GA | Inventive Example |

(continued)

| No. | Steel type | Annealing step | | Second cooling step | | | | Reheating step (included in second cooling step) | | Coating treatment condition | Remarks |
|---|---|---|---|---|---|---|---|---|---|---|---|
| | | Heating temperature (°C) | Average first cooling rate from 650°C to heating temperature (°C/s) | Average cooling rate from 250 to 400°C (°C/s) | Heat retention temperature (°C) | Heat retention time (s) | Cooling stop temperature (°C) | Reheating temperature (°C) | Heat retention time at reheating temperature (s) | Type | |
| 49 | S | 870 | 40 | 30.3 | - | - | 50 | 250 | 100 | GA | Inventive Example |
| 50 | T | 990 | 25 | 9.9 | - | - | 50 | 250 | 100 | GA | Inventive Example |
| 51 | U | 900 | 40 | 7.9 | - | - | 50 | 350 | 30 | CR | Inventive Example |
| 52 | V | 800 | 25 | 8.4 | - | - | 50 | 250 | 100 | CR | Inventive Example |
| 53 | W | 850 | 50 | 3.1 | - | - | 150 | 250 | 100 | GA | Inventive Example |
| 54 | X | 920 | 0.5 | 10.1 | - | - | 50 | 450 | 100 | GA | Inventive Example |
| 55 | Y | 880 | 5 | 15.1 | - | - | 50 | 450 | 5 | EG | Inventive Example |
| 56 | Z | 880 | 20 | 15.1 | - | - | 50 | 450 | 5 | GI | Inventive Example |

Underline. Outside the corresponding range.

Next, annealing, cooling, and reheating were performed under the conditions shown in Tables 2 and 3 to thereby obtain high strength cold rolled steel sheets (CRs). Some of the steel sheets were subjected to coating treatment to thereby obtain a hot-dip galvanized steel sheet (GI), hot-dip galvannealed steel sheets (GAs), and an electrogalvanized steel sheet (EG). The hot-dip galvanizing bath used for the GI was a zinc bath containing Al: 0.14 to 0.19% by mass, and the hot-dip galvanizing bath used for the GAs was a zinc bath containing Al: 0.14% by mass. The temperature of the baths was 470°C. The coating weight per side for the GI was about 45 to 72 $g/m^2$ (double-sided coating), and the coating weight per side for the GAs was about 45 $g/m^2$ (double-sided coating). In the GAs, the concentration of Fe in the coated layer was 9% by mass or more and 12% by mass or less. In the EG in which the coated layer was a Zn-Ni coated layer, the content of Ni in the coated layer was 9% by mass or more and 25% by mass or less.

The thus-obtained high strength cold rolled steel sheets and high strength coated steel sheets were used as steel samples, and the tensile properties, stretch flangeability (hole expandability), bendability, resistance to intra-steel sheet cracking in the spot weld HAZ were evaluated using test methods described later. The results are shown in Table 4.

[Table 4]

| No. | Steel type | Area fraction of M (%) | Sum of area fraction of a and/or volume fraction of retained γ (%) | Remaining microstructure | Concentration of boron atoms at prior-austenite grain boundaries with misorientation of 15 degrees or more (at%) | Number density of precipitates with size of 2 μm or more (pieces/mm$^2$) | YS (MPa) | TS (MPa) | YR (%) | λ (%) | Bendability (μm) | Resistance to intra-steel sheet cracking in spot weld HAZ | Remarks |
|---|---|---|---|---|---|---|---|---|---|---|---|---|---|
| 1 | A | 92 | 6 | θ | 4.6 | 12 | 1368 | 1591 | 86 | 40 | 99 | A | Inventive Example |
| 2 | A | 92 | 7 | θ | 3.6 | 15 | 1229 | 1576 | 78 | 37 | 177 | A | Inventive Example |
| 3 | A | 92 | 4 | θ | 3.0 | 14 | 1101 | 1508 | 73 | 37 | 59 | A | Inventive Example |
| 4 | A | 94 | 2 | θ | 0.3 | 11 | 1085 | 1486 | 73 | 44 | 52 | B | Inventive Example |
| 5 | A | 93 | 7 | θ | 0.5 | 91 | 1083 | 1547 | 70 | 33 | 188 | B | Inventive Example |
| 6 | A | 93 | 3 | θ | 0.5 | 76 | 1019 | 1477 | 69 | 33 | 184 | B | Inventive Example |
| 7 | A | 92 | 3 | θ | 0.3 | 97 | 1038 | 1549 | 67 | 32 | 195 | B | Inventive Example |
| 8 | A | 93 | 4 | θ | 0.5 | 95 | 1091 | 1536 | 71 | 32 | 182 | B | Inventive Example |
| 9 | A | 91 | 6 | θ | 0.4 | 19 | 1085 | 1550 | 70 | 38 | 75 | B | Inventive Example |
| 10 | A | 88 | 8 | θ | 5.1 | 59 | 970 | 1469 | 66 | 34 | 192 | A | Inventive Example |
| 11 | A | 94 | 5 | θ | 4.0 | 15 | 1048 | 1595 | 66 | 38 | 80 | A | Inventive Example |

| No. | Steel type | Area fraction of M (%) | Sum of area fraction of α and/or volume fraction of retained γ (%) | Remaining microstructure | Concentration of boron atoms at prior-austenite grain boundaries with misorientation of 15 degrees or more (at%) | Number density of precipitates with size of 2 μm or more (pieces/mm²) | YS (MPa) | TS (MPa) | YR (%) | λ (%) | Bendability (μm) | Resistance to intra-steel sheet cracking in spot weld HAZ | Remarks |
|---|---|---|---|---|---|---|---|---|---|---|---|---|---|
| 12 | B | 95 | 4 | θ | 4.2 | 28 | 1467 | 1667 | 88 | 36 | 134 | B | Inventive Example |
| 13 | C | 87 | 8 | θ | 2.9 | 5 | 987 | 1189 | 83 | 46 | 145 | B | Inventive Example |
| 14 | C | 89 | 7 | θ | 2.4 | 3 | 994 | 1258 | 79 | 48 | 72 | B | Inventive Example |
| 15 | C | 89 | 7 | θ | 2.7 | 5 | 934 | 1279 | 73 | 42 | 75 | B | Inventive Example |
| 16 | C | 89 | 7 | θ | 3.8 | 157 | 1061 | 1248 | 85 | 17 | 269 | B | Comparative Example |
| 17 | C | 88 | 10 | θ | 4.6 | 16L | 1016 | 1239 | 82 | 22 | 275 | B | Comparative Example |
| 18 | C | 88 | 10 | θ | 0.2 | 2 | 952 | 1190 | 80 | 36 | 139 | C | Comparative Example |
| 19 | C | 87 | 9 | θ | 0.2 | 168 | 970 | 1197 | 81 | 16 | 305 | C | Comparative Example |
| 20 | C | 88 | 7 | θ | 0.2 | 163 | 1069 | 1258 | 85 | 27 | 266 | C | Comparative Example |
| 21 | C | 89 | 8 | θ | 0.2 | 175 | 1058 | 1260 | 84 | 27 | 286 | C | Comparative Example |
| 22 | C | 89 | 8 | θ | 0.1 | 154 | 990 | 1222 | 81 | 26 | 268 | C | Comparative Example |

| No. | Steel type | Area fraction of M (%) | Sum of area fraction of α and/or volume fraction of retained γ (%) | Remaining microstructure | Concentration of boron atoms at prior-austenite grain boundaries with misorientation of 15 degrees or more (at%) | Number density of precipitates with size of 2 μm or more (pieces/mm²) | YS (MPa) | TS (MPa) | YR (%) | λ (%) | Bendability (μm) | Resistance to intra-steel sheet cracking in spot weld HAZ | Remarks |
|---|---|---|---|---|---|---|---|---|---|---|---|---|---|
| 23 | C | 89 | 9 | θ | 0.1 | 155 | 1056 | 1214 | 87 | 17 | 229 | C | Comparative Example |
| 24 | C | 47 | 5.0 | θ | 4.5 | 6 | 675 | 1125 | 60 | 37 | 56 | B | Comparative Example |
| 25 | C | 57 | 42 | θ | 3.1 | 4 | 798 | 1287 | 62 | 20 | 212 | B | Comparative Example |
| 26 | C | 88 | 6 | θ | 0.1 | 8 | 1027 | 1208 | 85 | 46 | 144 | C | Comparative Example |
| 27 | C | 57 | 39 | θ | 0.2 | 156 | 730 | 1177 | 62 | 24 | 314 | C | Comparative Example |
| 28 | C | 54 | 42 | θ | 7.3 | 177 | 687 | 1145 | 60 | 16 | 293 | A | Comparative Example |
| 29 | C | 48 | 49 | θ | 6.1 | 163 | 720 | 1143 | 63 | 21 | 307 | B | Comparative Example |
| 30 | C | 88 | 9 | θ | 0.1 | 3 | 1027 | 1237 | 83 | 48 | 59 | C | Comparative Example |
| 31 | C | 80 | 18 | θ | 3.6 | 5 | 831 | 1241 | 67 | 32 | 194 | A | Inventive Example |
| 32 | C | 76 | 22 | θ | 4.3 | 5 | 802 | 1234 | 65 | 31 | 194 | A | Inventive Example |
| 33 | C | 87 | 10 | θ | 2.5 | 8 | 1094 | 1216 | 90 | 48 | 78 | A | Inventive Example |

| No. | Steel type | Area fraction of M (%) | Sum of area fraction of a and/or volume fraction of retained γ (%) | Remaining microstructure | Concentration of boron atoms at prior-austenite grain boundaries with misorientation of 15 degrees or more (at%) | Number density of precipitates with size of 2 μm or more (pieces/mm²) | YS (MPa) | TS (MPa) | YR (%) | λ (%) | Bendability (μm) | Resistance to intra-steel sheet cracking in spot weld HAZ | Remarks |
|---|---|---|---|---|---|---|---|---|---|---|---|---|---|
| 34 | D | 89 | 8 | θ | 1.3 | 23 | 1702 | 2051 | 83 | 34 | 139 | A | Inventive Example |
| 35 | E | 45 | 52 | θ | 4.9 | 8 | 511 | 824 | 62 | 16 | 300 | A | Comparative Example |
| 36 | E | 56 | 42 | θ | 2.7 | 8 | 810 | 1266 | 64 | 31 | 200 | B | Comparative Example |
| 37 | G | 59 | 38 | θ | 1.9 | 3 | 387 | 615 | 63 | 27 | 317 | A | Comparative Example |
| 38 | H | 100 | 0 | - | 3.4 | 4 | 828 | 1293 | 64 | 23 | 220 | A | Comparative Example |
| 39 | I | 87 | 9 | θ | 0.1 | 174 | 752 | 1213 | 62 | 29 | 252 | C | Comparative Example |
| 40 | J | 89 | 9 | θ | 3.2 | 6 | 1167 | 1269 | 92 | 36 | 58 | A | Comparative Example |
| 41 | K | 89 | 9 | θ | 0.2 | 164 | 766 | 1277 | 60 | 15 | 303 | C | Comparative Example |
| 42 | L | 88 | 11 | θ | 0.0 | 2 | 926 | 1219 | 76 | 41 | 132 | C | Comparative Example |
| 43 | M | 88 | 9 | θ | 8.2 | 152 | 965 | 1237 | 78 | 24 | 261 | A | Comparative Example |
| 44 | N | 92 | 4 | θ | 0.4 | 87 | 1311 | 1561 | 84 | 32 | 190 | B | Inventive Example |

EP 4 696 802 A1

35

(continued)

| No. | Steel type | Area fraction of M (%) | Sum of area fraction of α and/or volume fraction of retained γ (%) | Remaining microstructure | Concentration of boron atoms at prior-austenite grain boundaries with misorientation of 15 degrees or more (at%) | Number density of precipitates with size of 2 μm or more (pieces/mm$^2$) | YS (MPa) | TS (MPa) | YR (%) | λ (%) | Bendability (μm) | Resistance to intra-steel sheet cracking in spot weld HAZ | Remarks |
|---|---|---|---|---|---|---|---|---|---|---|---|---|---|
| 45 | O | 91 | 7 | θ | 0.4 | 88 | 1153 | 1341 | 86 | 35 | 182 | B | Inventive Example |
| 46 | P | 92 | 4 | θ | 0.9 | 13 | 1331 | 1623 | 82 | 38 | 82 | A | Inventive Example |
| 47 | Q | 94 | 4 | θ | 3.2 | 81 | 1330 | 1565 | 85 | 32 | 191 | A | Inventive Example |
| 48 | R | 88 | 8 | θ | 1.0 | 1 | 1276 | 1934 | 66 | 32 | 130 | A | Inventive Example |
| 49 | S | 85 | 13 | θ | 1.1 | 20 | 1216 | 1842 | 66 | 33 | 184 | A | Inventive Example |
| 50 | T | 95 | 2 | θ | 1.9 | 13 | 1034 | 1543 | 67 | 44 | 175 | A | Inventive Example |
| 51 | U | 94 | 4 | θ | 4.7 | 7 | 1182 | 1459 | 81 | 39 | 88 | A | Inventive Example |
| 52 | V | 87 | 10 | θ | 0.3 | 76 | 976 | 1457 | 67 | 30 | 182 | B | Inventive Example |
| 53 | W | 92 | 4 | θ | 0.3 | 14 | 1175 | 1546 | 76 | 39 | 133 | B | Inventive Example |
| 54 | X | 89 | 10 | θ | 5.1 | 60 | 1263 | 1452 | 87 | 31 | 190 | A | Inventive Example |
| 55 | Y | 92 | 4 | θ | 0.4 | 20 | 1352 | 1519 | 89 | 41 | 179 | B | Inventive Example |

| No. | Steel type | Area fraction of M (%) | Sum of area fraction of a and/or volume fraction of retained γ (%) | Remaining microstructure | Concentration of boron atoms at prior-austenite grain boundaries with misorientation of 15 degrees or more (at%) | Number density of precipitates with size of 2 μm or more (pieces/mm²) | YS (MPa) | TS (MPa) | YR (%) | λ (%) | Bendability (μm) | Resistance to intra-steel sheet cracking in spot weld HAZ | Remarks |
|---|---|---|---|---|---|---|---|---|---|---|---|---|---|
| 56 | Z | 92 | 3 | θ | 5.1 | 88 | 1493 | 1678 | 89 | 32 | 168 | A | Inventive Example |

Underline: Outside the corresponding range.

M: martensite, a: ferrite and/or bainitic ferrite, retained γ: retained austenite, θ: cementite and/or metastable carbides

[Tensile test]

The tensile test was performed according to JIS Z 2241:2011. A JIS No. 5 test specimen was cut from one of the obtained steel sheets such that the test specimen was orthogonal to the rolling direction of the steel sheet. The tensile test was performed under the condition of a crosshead speed of $1.67 \times 10^{-1}$ mm/s to measure the YS and TS. In the present invention, when the yield ratio (YR) was 65% or more and 90% or less, the dimensional accuracy was considered high. The YR was calculated using the calculation method described in formula (2) above.

[Hole expansion test]

A hole expansion test was performed according to JIS Z 2256. One of the obtained steel sheets was sheared into a size of 100 mm $\times$ 100 mm, and a hole with a diameter of 10 mm was punched in the sheared steel sheet with a clearance of 12.5%. Then the steel sheet was held by a die with an inner diameter of 75 mm at a blank holding force of 9 ton (88.26 kN). While this state was maintained, a conical punch having a vertex angle of 60° was pressed into the hole, and the diameter of the hole at the crack initiation limit was measured. Then the (limiting) hole expansion ratio $\lambda$ (%) was determined from the following formula.

Limiting hole expansion ratio: $\lambda(\%) = \{(D_f - D_0) / D_0\} \times 100$

Here, $D_f$ is the hole diameter at the time of occurrence of cracking (mm), and $D_0$ is the initial hole diameter (mm). When the limiting hole expansion ratio $\lambda$ was 30% or more, the stretch flangeability immediately after production was considered excellent.

[Bending test]

The bending test was performed according to JIS Z 2248:2022. A strip-shaped test specimen having a width of 30 mm and a length of 100 mm was cut from one of the obtained steel sheets such that a direction parallel to the rolling direction of the steel sheet was aligned with the axial direction of the bending test. Then a 90° V-bending test was performed under the conditions of a pressing load of 100 kN and a press-holding time of 5 seconds. In the present disclosure, the bending test was performed on five samples, with the bending radius (R) set such that the value of R/t obtained by dividing the bending radius (R) by the sheet thickness (t) was about 4.5, i.e., 4.3 to 4.7. Next, for all the five samples, the length of a crack in a ridge portion at the apex of the bend was evaluated. When the crack length was 200 $\mu$m or less, the bendability was considered excellent. The crack length was evaluated by performing the measurement on the ridge portion at the apex of the bend using a digital microscope (RH-2000 manufactured by HIROX CO., LTD.) at a magnification of 40 to 160X.

[Test for intra-steel sheet cracking in spot weld HAZ]

A test specimen with a thickness of 1.4 mm, a length of 30, and a width of 100 mm was cut out such that its lengthwise direction coincided with the rolling direction and placed on a hot-dip galvanized steel sheet for the test having the same size as the cut test specimen and including a hot-dip galvanized layer with a coating weight per side of 50 g/m$^2$ to thereby prepare a sheet set. Next, a servo motor pressing-type single-phase AC (50 Hz) resistance welder and electrodes with a tip radius of 6 mm were used to perform resistance welding while the sheet set was inclined 5° with respect to the electrodes of the resistance welder and a clearance of 1.5 mm was provided between the lower electrode and the lower steel sheet. Specifically, the sheet set was resistance-welded under the welding conditions of a welding pressure of 3.5 kN and a hold time of 0.16 seconds or 0.20 seconds while the welding current and the welding time were adjusted such that the nugget had a diameter of 5.9 mm, and the sheet set with a weld was thereby obtained. Next, the sheet set with the weld was cut into halves such that the weld was included in the cross sections, and one of the cross sections of the weld was observed under an optical microscope (200X). The resistance to intra-steel sheet cracking in the spot weld HAZ was evaluated according to the criteria described above. The same evaluation was also performed on samples with thicknesses of 0.8 mm and 2.3 mm.

The area fraction of martensite, the area fraction of ferrite, the volume fraction of retained austenite, the concentration of boron atoms at prior-austenite grain boundaries with a misorientation of 15 degrees or more, and the number density of precipitates with a size of 2 $\mu$m or more were determined by the methods described above. As for the remaining microstructures, observation was performed using the following method. A sample was cut from one of the steel sheets such that a thicknesswise cross section (L cross section) parallel to the rolling direction of the steel sheet served as the observation surface, and the observation surface was mirror-polished using a diamond paste. Then the resulting observation surface was etched with 3 vol.% nital to make the microstructure visible. A position 1/4 of the thickness of the steel sheet was used as an observation position, and an SEM was used to observe three viewing fields each having a viewing area of 17 $\mu$m × 23 $\mu$m at a magnification of 5000X under the condition of an acceleration voltage of 15 kV. Carbides in the obtained microstructure images were identified as remaining microstructures.

As shown in Table 4, in Inventive Examples, the TS, YR, $\lambda$, bendability, and resistance to intra-steel sheet cracking in the spot weld HAZ were excellent. In Comparative Examples, at least one of the TS, YR, $\lambda$, bendability, and resistance to intra-steel sheet cracking in the spot weld HAZ was poor.

The embodiments of the invention have been described. However, the invention is not limited to the description of the embodiments that forms part of the disclosure of the invention. That is, other embodiments, Examples, operating techniques, etc. made based on the embodiments by those skilled in the art are all within the scope of the invention. For example, in the series of heat treatments in the production method described above, no particular limitation is imposed on the facilities etc. used to heattreat the steel sheet, so long as the thermal history conditions are satisfied.

Industrial Applicability

According to the present invention, a high strength steel sheet of 1180 MPa or more can be obtained, which has excellent stretch flangeability, excellent bendability, and high resistance to intra-steel sheet cracking in the spot weld HAZ and can be used to produce parts with high dimensional accuracy.

In particular, the high strength steel sheet of the invention has high resistance to intra-steel sheet cracking in the spot weld HAZ and can therefore be used for automobile framework structural parts with different sizes and shapes while high component strength is ensured. This allows a reduction in vehicle body weight, and the fuel economy can thereby be improved, so that the high strength steel sheet is extremely valuable for industrial applications.

**Claims**

1.   A high strength steel sheet having a chemical composition containing, in % by mass,

C: 0.030% or more and 0.500% or less,
Si: 0.01% or more and 2.50% or less,
Mn: 0.10% or more and 5.00% or less,
P: 0.100% or less,
S: 0.0200% or less,
Al: 0.100% or less,
N: 0.0100% or less,
O: 0.0100% or less,
Ti: 0.002% or more and 0.200% or less, and
B: 0.0002% or more and 0.0100% or less,
with the balance being Fe and incidental impurities,
wherein an effective Ti mole fraction ($x_{Ti,eff}$) determined by formula (1) below is 0.001 or more,
wherein the high strength steel sheet has, at a position 1/4 of a thickness, a steel microstructure
in which an area fraction of martensite is 60% or more and 99% or less and
in which a sum of an area fraction of ferrite and/or a volume fraction of retained austenite is more than 0% and 40% or less,
wherein a concentration of boron atoms at prior-austenite grain boundaries with a misorientation of 15 degrees or more is 0.3 at% or more and 6.0 at% or less, and
wherein a number density of precipitates with a size of 2 $\mu$m or more is 150 pieces/mm$^2$ or less:

$$x_{Ti,eff} = x_{Ti} - x_N - x_S, \qquad (1)$$

where $x_{Ti}$, $x_N$, and $x_S$ are contents (mole fractions) of respective elements in the steel sheet.

2.   The high strength steel sheet according to claim 1, wherein the chemical composition further contains, in % by mass, at least one element selected from

Nb: 0.200% or less,
V: 0.200% or less,
Ta: 0.10% or less,

W: 0.10% or less,
Cr: 1.00% or less,
Mo: 1.00% or less,
Co: 0.010% or less,
Ni: 1.00% or less,
Cu: 1.00% or less,
Sn: 0.200% or less,
Sb: 0.200% or less,
Ca: 0.0100% or less,
Mg: 0.0100% or less,
REMs: 0.0100% or less,
Zr: 0.100% or less,
Te: 0.100% or less,
Hf: 0.10% or less, and
Bi: 0.200% or less.

3. A high strength coated steel sheet comprising: the high strength steel sheet according to claim 1 or 2; and a coated layer on at least one side of the high strength steel sheet.

4. A method for producing a high strength steel sheet, the method comprising:

preparing a steel slab having the chemical composition according to claim 1 or 2;
cooling the steel slab at an average cooling rate of 50°C/hr or more and 500°C/hr or less in a temperature range of 700°C or higher and 1000°C or lower;
subsequently heating the resulting steel slab to a slab heating temperature of 1150°C or higher at an average slab heating rate of 25°C/min or less in a temperature range of 900°C or higher and 1150°C or lower such that a residence time in a range from 1100°C to the slab heating temperature is 20 minutes or longer;
then hot-rolling the resulting steel slab with a rough rolling delivery temperature set to 1100°C or higher and a finish rolling entry temperature set to 1050°C or higher to thereby obtain a hot rolled sheet;
subsequently pickling the hot rolled sheet to obtain a pickled sheet;
subsequently subjecting the pickled sheet to cold rolling at a cumulative rolling reduction ratio of 20% or more and 95% or less such that a sheet traveling speed in a final pass of the cold rolling is 50 mpm or more to thereby obtain a cold rolled sheet;
subsequently performing an annealing step of heating the cold rolled sheet to a heating temperature of 780°C or higher; and
subsequently subjecting the resulting cold rolled sheet to first cooling under a condition of an average cooling rate of 0.5°C/s or more and 50°C/s or less in a temperature range from the heating temperature to 650°C.

5. The method for producing a high strength steel sheet according to claim 4, further comprising, after the first cooling, performing second cooling such that an average cooling rate in a temperature range of 250°C or higher and 400°C or lower is 1.0°C/s or more.

6. The method for producing a high strength steel sheet according to claim 4, further comprising, after the first cooling, performing second cooling including heat retention at a heat retention temperature of 100°C or higher and 450°C or lower for 5 seconds or longer.

7. The method for producing a high strength steel sheet according to claim 4, further comprising, after the first cooling, performing second cooling including: cooling the cold rolled sheet to a cooling stop temperature of 250°C or lower; and then reheating the resulting cold rolled sheet to a reheating temperature of (the cooling stop temperature + 50°C) or higher and 450°C or lower to perform heat retention at the reheating temperature for 5 seconds or longer.

8. A method for producing a high strength coated steel sheet, the method comprising, after the annealing step according to claim 4, performing a coating step of subjecting at least one side of the cold rolled sheet to coating treatment.

9. The method for producing a high strength coated steel sheet according to claim 8, further comprising, after the first cooling, performing second cooling such that an average cooling rate in a temperature range of 250°C or higher and 400°C or lower is 1.0°C/s or more.

10. The method for producing a high strength coated steel sheet according to claim 8, further comprising, after the first cooling, performing second cooling including heat retention at a heat retention temperature of 100°C or higher and 450°C or lower for 5 seconds or longer.

11. The method for producing a high strength coated steel sheet according to claim 8, further comprising, after the first cooling, performing second cooling including: cooling the cold rolled sheet to a cooling stop temperature of 250°C or lower; and then reheating the resulting cold rolled sheet to a reheating temperature of (the cooling stop temperature + 50°C) or higher and 450°C or lower to perform heat retention at the reheating temperature for 5 seconds or longer.

12. A member comprising the high strength steel sheet according to claim 1 or 2, the high strength steel sheet being used for at least part of the member.

13. A member comprising the high strength coated steel sheet according to claim 3, the high strength coated steel sheet being used for at least part of the member.

## INTERNATIONAL SEARCH REPORT

| International application No. |
| --- |
| **PCT/JP2024/018164** |

### A. CLASSIFICATION OF SUBJECT MATTER

*C22C 38/00*(2006.01)i; *C21D 9/46*(2006.01)i; *C22C 38/14*(2006.01)i; *C22C 38/60*(2006.01)i
FI:  C22C38/00 301S; C21D9/46 G; C21D9/46 J; C22C38/00 301T; C22C38/14; C22C38/60

According to International Patent Classification (IPC) or to both national classification and IPC

### B. FIELDS SEARCHED

Minimum documentation searched (classification system followed by classification symbols)

C22C38/00-38/60; C21D9/46

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | WO 2023/032424 A1 (JFE STEEL CORPORATION) 09 March 2023 (2023-03-09) | 1-13 |
| A | WO 2023/032423 A1 (JFE STEEL CORPORATION) 09 March 2023 (2023-03-09) | 1-13 |
| A | JP 2022-24998 A (JFE STEEL CORPORATION) 09 February 2022 (2022-02-09) | 1-13 |
| A | WO 2018/147400 A1 (JFE STEEL CORPORATION) 16 August 2018 (2018-08-16) | 1-13 |
| P, A | WO 2024/053736 A1 (NIPPON STEEL CORPORATION) 14 March 2024 (2024-03-14) | 1-13 |

☐ Further documents are listed in the continuation of Box C.     ☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **29 July 2024** | **06 August 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/018164**

| Patent document cited in search report | | | Publication date (day/month/year) | Patent family member(s) | | | Publication date (day/month/year) |
|---|---|---|---|---|---|---|---|
| WO | 2023/032424 | A1 | 09 March 2023 | CN | 117881811 | A | |
| | | | | KR | 10-2024-0035537 | A | |
| | | | | EP | 4386099 | A1 | |
| WO | 2023/032423 | A1 | 09 March 2023 | CN | 117716060 | A | |
| | | | | KR | 10-2024-0035536 | A | |
| | | | | EP | 4386098 | A1 | |
| JP | 2022-24998 | A | 09 February 2022 | (Family: none) | | | |
| WO | 2018/147400 | A1 | 16 August 2018 | US | 2020/0040420 | A1 | |
| | | | | EP | 3581670 | A1 | |
| | | | | KR | 10-2019-0107089 | A | |
| | | | | CN | 110312813 | A | |
| | | | | MX | 2019009599 | A | |
| WO | 2024/053736 | A1 | 14 March 2024 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6787535 B